**Europäisches Patentamt**

**European Patent Office**

**Office européen des brevets**

(19)

(11) Veröffentlichungsnummer: **0 121 609**
**B1**

(12) **EUROPÄISCHE PATENTSCHRIFT**

(45) Veröffentlichungstag der Patentschrift:
**06.04.88**

(51) Int. Cl.⁴: **B 27 C 9/02**

(21) Anmeldenummer: **83113228.7**

(22) Anmeldetag: **30.12.83**

(54) **Universalmaschine für die Holz-/Kunststoffbearbeitung.**

(30) Priorität: **14.03.83 DE 3309025**

(43) Veröffentlichungstag der Anmeldung:
**17.10.84 Patentblatt 84/42**

(45) Bekanntmachung des Hinweises auf die Patenterteilung:
**06.04.88 Patentblatt 88/14**

(84) Benannte Vertragsstaaten:
**AT BE CH FR GB IT LI NL SE**

(73) Patentinhaber: **Stephan- Werke GmbH & Co.,
Ohsener Strasse 79/83, D-3250 Hameln 1 (DE)**

(72) Erfinder: **Bons, Antonie, Kranichfeld 19, D-3250
Hameln 1 (DE)**
Erfinder: **Raabe, Erwin, Ginsterweg 1, D-3253
Hess.- Oldendorf 2 Fischbeck (DE)**

(74) Vertreter: **Gramm, Werner, Prof. Dipl.- Ing.,
Patentanwälte Gramm + Lins Theodor- Heuss-
Strasse 2, D-3300 Braunschweig (DE)**

(56) Entgegenhaltungen:
CA-A-1 078 709
CH-A-146 629
CH-A-247 404
DE-C-182 321
DE-C-343 483
DE-C-401 375
DE-C-805 940
FR-A-805 716
FR-A-1 594 086
FR-A-2 032 572
GB-A-468 028
US-A-1 506 154
US-A-1 619 158
US-A-1 763 497
US-A-1 789 398
US-A-1 973 409
US-A-2 080 475
US-A-2 109 061

(56) Entgegenhaltungen: (Fortsetzung)
US-A-2 743 746
US-A-2 913 021
US-A-3 011 533

EP 0 121 609 B1

## Beschreibung

Die Erfindung betrifft eine Universalmaschine für die Holz-/Kunststoffbearbeitung mit einem innerhalb eines Maschinengehäuses in einer Höhenverstelleinrichtung gelagerten Arbeitsmotor, der mit seiner Motorwelle, deren Enden als Arbeitsspindeln ausgebildet sind, über eine Verschwenkeinrichtung aus einer horizontalen in eine vertikale Stellung verschwenkbar ist.

Derartige Universalmaschinen sind in erster Linie für den Heimwerker, für eine mobile Werkstatt o.dergl. bestimmt. Auf dem Markt werden zahlreiche Konstruktionen angeboten, denen jedoch bestimmte Nachteile anhaften. Entweder sind mehrere Arbeitsmotoren vorgesehen, die zu einer wesentlichen Erhöhung des Anschaffungspreises für eine derartige Maschine führen. Meist verkörpert bereits das Grundmodell eine bestimmte Bearbeitungsmaschine, z. B. eine Dickenhobeleinrichtung, an die dann die verschiedenen Zusatzaggregate angebaut werden müssen. Dieses Konzept zwingt zu Kompromissen; so erfordert z. B. die Umrüstung der genannten Dickenhobeleinrichtung auf eine Kreissäge den seitlichen Anbau eines zusätzlichen Tisches; dies erfordert zusätzlichen Arbeitsraum und führt in der Regel zu labilen Anbaukonstruktionen, die die Fertigungsgenauigkeit beeinträchtigen.

Die eingangs erläuterte Universalmaschine läßt sich der FR-PS-1 594 086 entnehmen. Hier ist der Arbeitsmotor ständig mit einer Kreissäge bestückt, während die andere Arbeitsspindel des Arbeitsmotors lediglich für einen Riemenantrieb verwendet werden kann. Diese Arbeitsspindel ragt in keiner Stellung des Arbeitsmotors über das Maschinengehäuse hinaus. Es muß immer ein Vorgelege vorgesehen werden, das die eigentliche Arbeitsspindel für die Werkzeuge aufnimmt. Ständig vorgesehen ist eine Hobelwelle, die an ihrem einen Ende mit einem Bohrer und an ihrem anderen Ende mit einem Fräserhalter bestückt ist. Alle diese Werkzeuge sind somit permanent installiert. Abdeckungen für die nicht benötigten Werkzeuge sind nicht vorgesehen. Für den vorgesehenen Bohrer fehlen z. B. Bohrervorschub, Werkstückführung sowie Halteeinrichtungen für das Werkstück. Das zu bohrende Werkstück muß also von Hand gegen den Bohrer gedrückt werden. Das auf seinen Seiten weitgehend offen gehaltene Maschinengehäuse ist auf seiner Oberseite durch einen Säge- und Frästisch abgedeckt, der in eine angenähert lotrechte Stellung verschwenkbar ist. Dieser Säge- und Frästisch weist drei Öffnungen auf, die zum Durchtritt der Säge, der Hobelwelle sowie des Fräserhalters bestimmt sind. Ferner ist am Maschinengehäuse ein schmaler Tisch angelenkt, der innerhalb einer Horizontalebene verschwenkbar ist. Außerdem läßt sich aus dem Maschinengehäuse ein weiterer schmaler Tisch herausziehen. Diese beiden Tische liegen in ihrer Wirkstellung parallel nebeneinander. Das Maschinengehäuse selbst weist keine Durchtrittsöffnungen für die Enden der Motorwelle des Arbeitsmotors auf.

Der Erfindung liegt die Aufgabe zugrunde, eine Universalmaschine des eingangs erläuterten Typs zu entwickeln, die mit nur einem einzigen Arbeitsmotor auskommt, eine einfache und schnelle Umrüstung ermöglicht und trotz eines nur geringen Arbeitsplatzbedarfs eine hohe Fertigungspräzision ermöglicht.

Diese Aufgabe wird gemäß der Erfindung durch folgende Merkmale gelöst:

a) Das Maschinengehäuse umschließt den Arbeitsmotor allseitig und wird nach oben von einer ersten horizontalen Montagefläche begrenzt und weist eine zweite und eine tiefergelegene dritte horizontale Montagefläche auf, wobei sich die zweite ausgehend von einer Seitenwandung und die dritte von einer dieser Seitenwandung gegenüberliegenden Seitenwandung des Gehäuses nach außen erstrecken, und wobei diese drei Montageflächen einen integralen Bestandteil des Maschinengehäuses bilden;

b) in der ersten Montagefläche sowie in der der dritten Montagefläche zugeordneten Seitenwandung ist je eine Durchtrittsöffnung vorgesehen, durch die die eine Arbeitsspindel bei vertikaler bzw. horizontaler Stellung des Arbeitsmotors hindurchragt;

c) die der zweiten Montagefläche zugewandte Seitenwandung weist eine Durchtrittsöffnung auf, die mit der anderen Arbeitsspindel fluchtet wenn diese horizontal ausgerichtet ist;

d) zumindest die erste und zweite Montagefläche sind mit Zentrierelementen bestückt zur lösbaren Aufnahme einer Schutzhaube sowie auswechselbarer, eigenständiger Arbeitsgeräte.

Dabei ist es zweckmäßig, wenn die Schutzhaube eine obere, auf der ersten Montagefläche aufliegende Abdeckplatte sowie Abdeckungen für die für das jeweilige Arbeitsgerät nicht benötigten Durchtrittsöffnungen des Maschinengehäuses bzw. für die aus diesem herausragende Arbeitsspindel aufweist.

Die erfindungsgemäße Universalmaschine bietet somit dreiseitige Anbaumöglichkeiten für Arbeitsmaschinen. Dadurch kann auf den seitlichen Anbau zusätzlicher Arbeitstische o. dergl. völlig verzichtet werden. Zumindest die erste und zweite Montagefläche können mit lotrechten Zentrierstiften bestückt sein, während die zweite und dritte Montagefläche lotrechte Absenkungen mit Bodenlöchern aufweisen können.

Das Maschinengehäuse kann eine untere Abdeckung sowie einen darüber angeordneten Absaugstutzen für eine Staub- und Späneabsaugung aufweisen. Die Absaugung selbst kann z. B. mit einem handelsüblichen Bodenstaubsauger vorgenommen werden.

Die Höhenverstelleinrichtung für den Arbeitsmotor kann zwei im Bereich der zweiten Seitenwandungen angeordnete, synchron antreibbare Vertikalspindeln sowie zwei dazu parallel liegende Führungsstangen aufweisen, an denen eine Motoraufnahme höhenverstellbar geführt ist. Diese Ausbildung ist insbesondere unter Berücksichtigung des Arbeitsschutzes sehr viel günstiger als die bei bekannten Konstruktionen üblicherweise vorgesehene Höhenverschwenkbarkeit um eine seitliche Achse. Die erfindungsgemäße Verschwenkeinrichtung für den Arbeitsmotor kann eine horizontale, senkrecht zur Motorwelle liegende Verschwenkachse aufweisen, um die der Arbeitsmotor um zumindest 135° stufenlos schwenkbar und in der gewünschten Schwenkstellung arretierbar ist. Dabei läßt sich der Arbeitsmotor auch in verschwenkter Stellung lotrecht verstellen.

Die bei lotrechter Lage der Motorwelle durch die erste Montagefläche ragende Arbeitsspindel ist vorzugsweise in einem verstärkten Lagerschild mit verstärkter Lagerung gelagert, um so die z. B. beim Fräsen auftretenden Kräfte problemlos aufnehmen zu können.

Auf der ersten Montagefläche kann z. B. mit Schnellverschlüssen ein Säge- und Frästisch lösbar befestigt sein, der veränderbare Durchtrittsöffnungen für die Arbeitsspindel, das Kreissägeblatt oder ein Fräswerkzeug aufweisen kann. Dabei kann in besonders vorteilhafter Weise an dem Säge- und Frästisch eine Abdeckung für die dem Kreissägeblatt zugeordnete Durchtrittsöffnung bzw. kreissegmentförmige Ausnehmung sowie eine Abdeckung für die aus der gegenüberliegenden Seitenwandung ragende Arbeitsspindel befestigt sein. Durch bloßes Aufsetzen des Säge- und Frästisches auf die erste Montagefläche erfolgt somit automatisch eine Abdeckung der Gefahrbereiche.

Weitere Ausführungsarten der Erfindung, insbesondere weitere auswechselbare Arbeitsaggregate sind Gegenstand weiterer Unteransprüche und werden auch hinsichtlich ihrer Vorteile anhand von Ausführungsbeispielen näher erläutert.

In der Zeichnung sind einige als Beispiele dienende Ausführungsformen der Erfindung dargestellt. Es zeigen:

Figur 1 das Grundmodell einer Universalmaschine in Seitenansicht;

Figur 2 das Grundmodell gemäß Figur 1 in Draufsicht;

Figur 3 das mit einem Säge- und Frästisch bestückte Grundmodell im Längsschnitt und in einer gegenüber Fig. 1 um 90° verdrehten Stellung;

Figur 4 die Darstellung gemäß Figur 3 in Draufsicht;

Figur 5 das Grundmodell in einer Darstellung gemäß Fig. 1 jedoch mit aufgesetztem Säge- und Frästisch sowie einer Frässchutzhaube;

Figur 6 die Darstellung gemäß Figur 5 in Draufsicht;

Figur 7 eine am Grundmodell montierte Langlochbohreinrichtung in Seitenansicht und zum Teil im Längsschnitt;

Figur 8 die Darstellung gemäß Figur 7 in Draufsicht und im Bereich des Antriebsmotors im Horizontalschnitt;

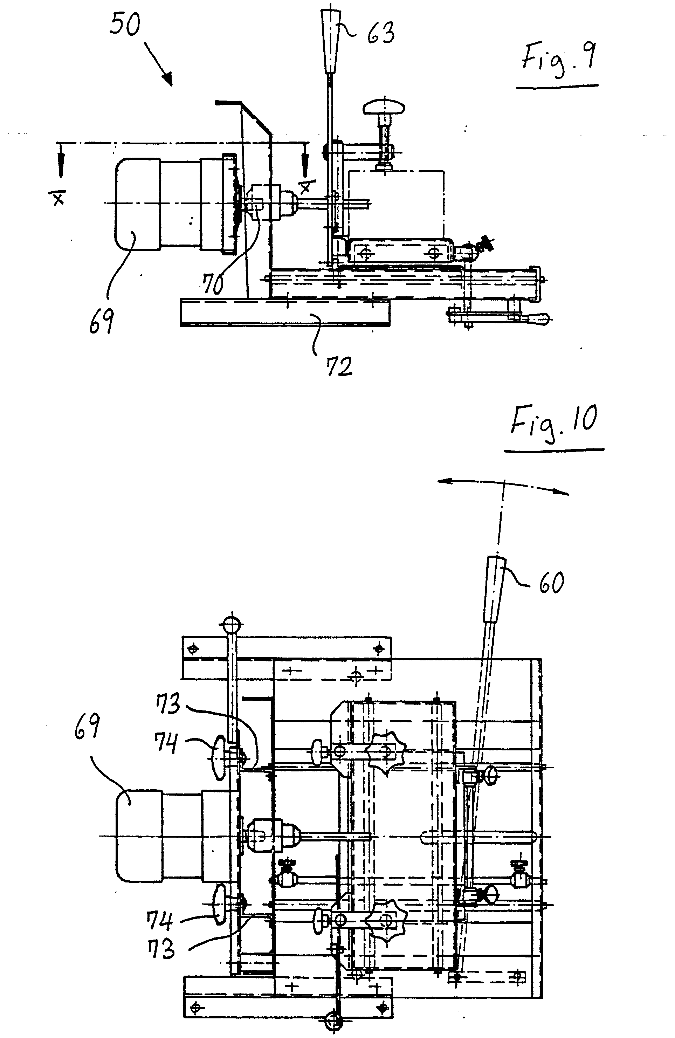

Figur 9 die Langlochbohreinrichtung in einer Darstellung gemäß Figur 7, jedoch getrennt vom Grundmodell und versehen mit einem eigenen Antrieb;

Figur 10 die Darstellung gemäß Figur 9 in Draufsicht und zum Teil einen Schnitt gemäß der Linie X - X in Figur 9;

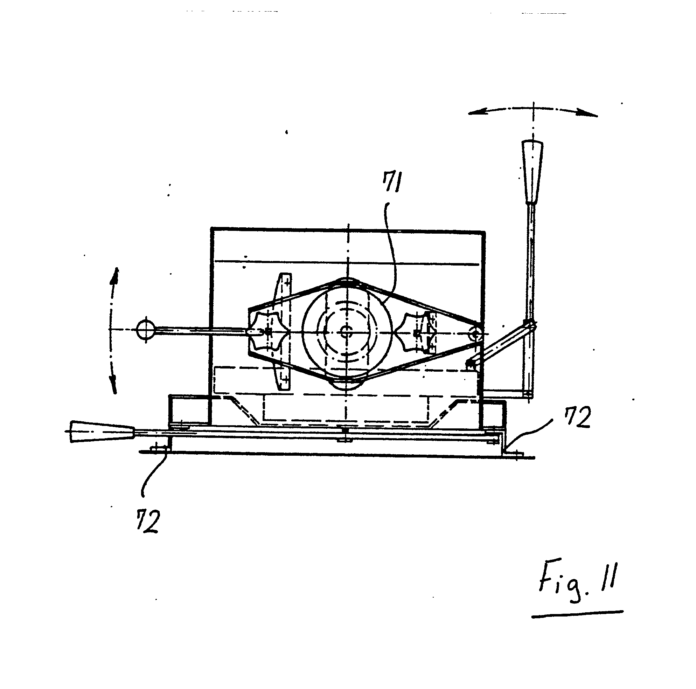

Figur 11 die Darstellung gemäß Figur 9 in linker Stirnansicht;

Figur 12 eine am Grundmodell montierte Bandschleifmaschine in Seitenansicht;

Figur 13 die Darstellung gemäß Figur 12 in Draufsicht;

Figur 14 einen Querschnitt durch die Darstellung gemäß Figur 12;

Figur 15 die in Figur 12 dargestellte Bandschleifmaschine als selbständiges Arbeitsaggregat mit Eigenantrieb;

Figur 16 die Darstellung gemäß Figur 15 in Draufsicht;

Figur 17 einen Querschnitt durch die Darstellung gemäß Figur 15;

Figur 18 eine am Grundmodell montierte Tellerschleifmaschine in Seitenansicht;

Figur 19 die Darstellung gemäß Figur 18 in einer Ansicht gemäß Blickrichtung X in Figur 18;

Figur 20 die Tellerschleifmaschine gemäß Figur 18 als selbständiges Arbeitsaggregat mit Eigenantrieb;

Figur 21 die Darstellung gemäß Figur 20 in einer Ansicht gemäß Blickpfeil X in Figur 20;

Figur 22 eine am Grundmodell montierte Sichtschleifeinrichtung in Stirnansicht;

Figur 23 die Darstellung gemäß Figur 22 in Draufsicht;

Figur 24 eine am Grundmodell montierte Abrichthobelmaschine in Seitenansicht und zum Teil im Längsschnitt;

Figur 25 die Darstellung gemäß Figur 24 in Draufsicht;

Figur 26 die Darstellung gemäß Figur 24 in linker Stirnansicht;

Figur 27 die Abrichthobelmaschine gemäß Figur 24 als eigenständiges Arbeitsaggregat mit Eigenantrieb;

Figur 28 die Darstellung gemäß Figur 27 in Draufsicht;

Figur 29 die Darstellung gemäß Figur 27 in linker Stirnansicht;

Figur 30 eine am Grundmodell montierte Bandsäge in Stirnansicht und zum Teil im Vertikalschnitt;

Figur 31 die Darstellung gemäß Figur 30 in Seitenansicht;

Figur 32 die Bandsäge gemäß Figur 30 als eigenständiges Arbeitsaggregat mit Eigenantrieb in einer Darstellung gemäß Figur 30;

Figur 33 die Darstellung gemäß Figur 32 in Seitenansicht;

Figur 34 eine am Grundmodell montierte Drechselmaschine in Stirnansicht und zum Teil im Längsschnitt;

Figur 35 die Darstellung gemäß Figur 34 in Draufsicht;

Figur 36 die Drechselmaschine gemäß Figur 34 als eigenständiges Arbeitsaggregat mit Eigenantrieb;

Figur 37 die Darstellung gemäß Figur 36 in Draufsicht und

Figur 38 eine Darstellung gemäß Fig. 36 in linker Stirnansicht.

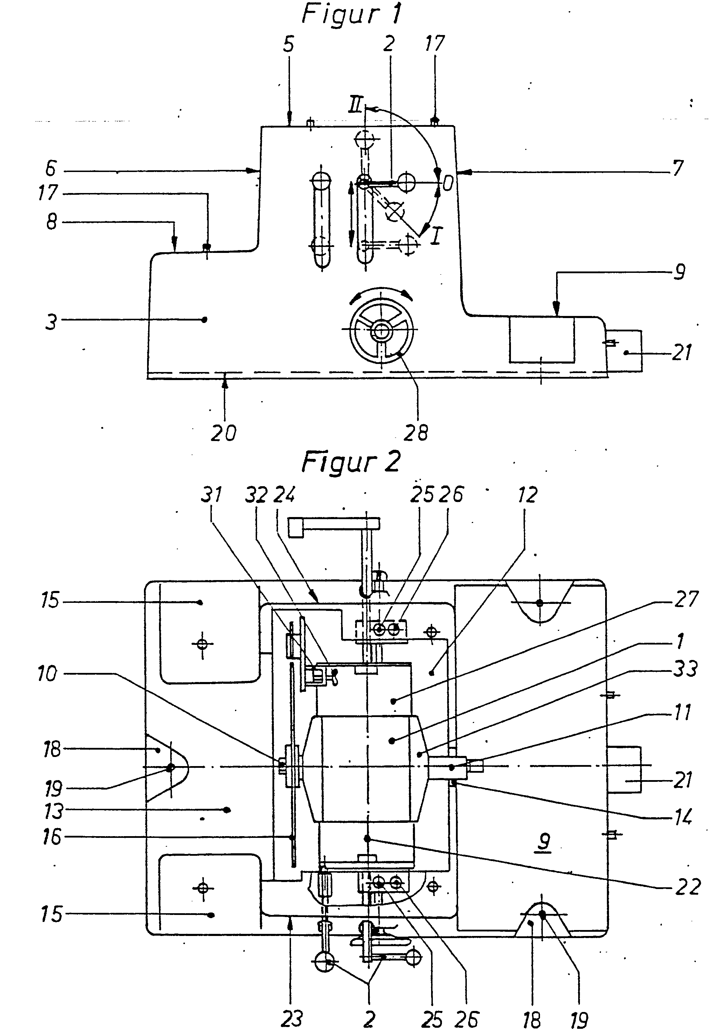

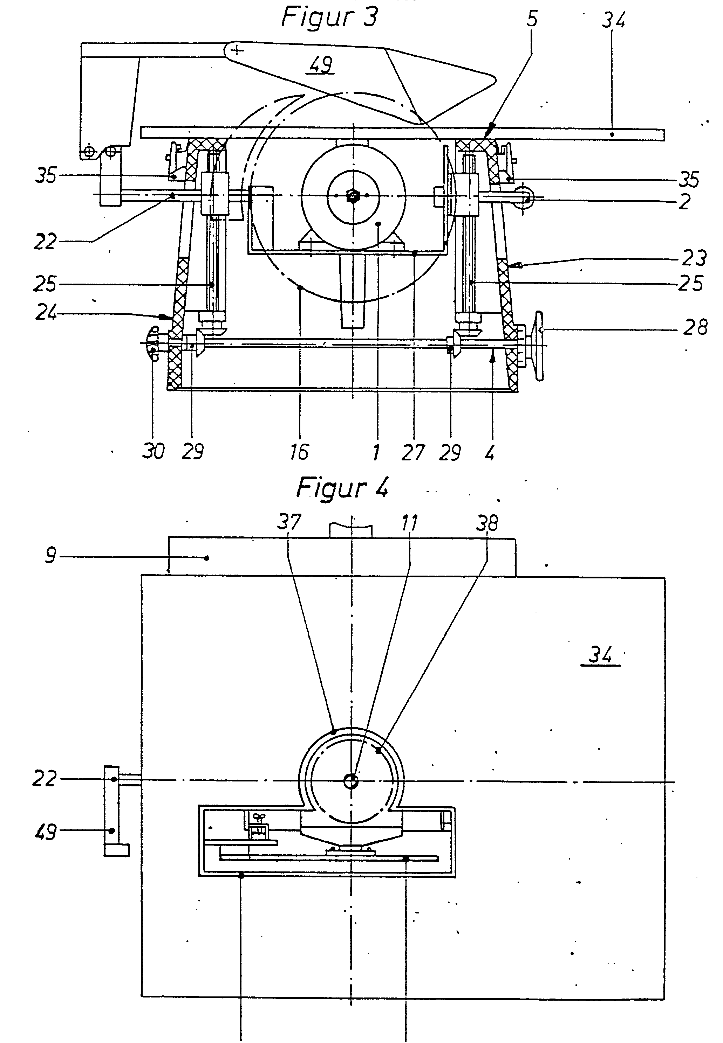

Die dargestellte Universalmaschine umfaßt ein insbesondere in den Figuren 1 und 2 dargestelltes Grundmodell mit einem Arbeitsmotor 1, der mit seiner Motorwelle über eine Verschwenkeinrichtung 2 aus einer horizontalen in eine vertikale Stellung verschwenkbar ist. Ein Maschinengehäuse 3 umschließt allseitig den Arbeitsmotor 1, der im Maschinengehäuse in der Verschwenkeinrichtung 2 und in einer Höhenverstelleinrichtung 4 (siehe Fig. 3) gelagert ist. Das Maschinengehäuse 3 wird nach oben von einer ersten horizontalen Montagefläche 5 zur Befestigung auswechselbarer Arbeitsgeräte begrenzt und weist an zwei sich gegenüberliegenden ersten Seitenwandungen 6, 7 je eine zweite und eine dritte, tiefer gelegene und sich nach außen erstreckende horizontale Montagefläche 8, 9 auf, wobei die zweite Montagefläche 8 höher liegt als die dritte Montagefläche 9. Die beiden Enden der Motorwelle des Arbeitsmotors 1 sind jeweils als Arbeitsspindeln 10, 11 ausgebildet, für die in der ersten Montagefläche 5 sowie in den beiden ersten Seitenwandungen 6, 7 je eine Durchtrittsöffnung 12, 13, 14 vorgesehen ist. Die zweite Montagefläche 8 weist zwei Teilflächen 15 auf, zwischen denen eine kreissegmentförmige Ausnehmung vorgesehen ist, die auch als Durchtrittsöffnung 13 in der zugeordneten Seitenwandung 6 zur Aufnahme eines Kreissägeblattes 16 dient.

Die erste, zweite und dritte Montagefläche 5, 8, 9 sind mit lotrechten Zentrierstiften 17 bestückt, während die zweite und dritte Montagefläche 8, 9 lotrechte Absenkungen 18 mit Bodenlöchern 19 aufweisen. In der der dritten Montagefläche 9 zugeordneten Seitenwandung 7 ist die für die Arbeitsspindel 11 vorgesehene Durchtrittsöffnung 14 als lotrechtes Langloch ausgebildet.

Das Maschinengehäuse 3 besteht aus einer doppelten Kunststoffschale mit dazwischen ausgeschäumtem Kunststoff und weist eine untere Abdeckung 20 sowie einen darüber angeordneten Absaugstutzen 21 für eine Staub- und Späneabsaugung auf.

Die Verschwenkeinrichtung 2 für den Arbeitsmotor 1 weist eine horizontale, senkrecht zur Motorwelle liegende Verschwenkachse 22 auf, um die der Arbeitsmotor um zumindest 135° stufenlos schwenkbar und in der gewünschten Schwenkstellung 0-I und II arretierbar ist.

Die insbesondere in Figur 3 dargestellte Höhenverstelleinrichtung 4 für den Arbeitsmotor 1 weist zwei im Bereich der zweiten Seitenwandungen 23, 24 angeordnete, synchron antreibbare Vertikalspindeln 25 sowie zwei dazu parallel liegende Führungsstangen 26 auf, an denen eine Motoraufnahme 27 höhenverstellbar geführt ist. Dabei erfolgt der Antrieb der beiden Vertikalspindeln 25 über ein in der Seitenwandung 23 gelagertes Handrad 28 und zwei Kegelradpaare 29. Der Arbeitsmotor 1 läßt sich in seiner jeweiligen Höhenlage durch Betätigung eines Klemm-Handrades 30 festklemmen. Die Motoraufnahme 27 weist ein Führungsrohr 31 auf, in dem eine Spaltkeilhalterung lösbar aufgenommen und durch eine Klemmschraube 32 blockiert ist. Dadurch läßt sich die Spaltkeilhalterung komplett aus- und einbauen.

Die bei lotrechter Lage der Motorwelle durch eine erste Montagefläche 5 ragende Arbeitsspindel 11 ist in einem verstärkten Lagerschild 33 mit verstärkter Lagerung gelagert.

Die Figuren 3 bis 6 lassen einen Säge- und Frästisch 34 erkennen, der auf der ersten Montagefläche 5 mit Schnellverschlüssen 35 lösbar befestigt ist und veränderbare Durchtrittsöffnungen 36, 37 für die Arbeitsspindel 11, das Kreissägeblatt 16 oder ein Fräswerkzeug 38 aufweist. Ferner sind an dem Säge- und Frästisch 34 eine Abdeckung 39 für die dem Kreissägeblatt 16 zugeordnete Durchtrittsöffnung 13 bzw. kreissegmentförmige Ausnehmung sowie eine Abdeckung 40 für die aus der gegenüberliegenden Seitenwandung 7 ragende Arbeitsspindel 11 befestigt. Ferner trägt der Säge- und Frästisch 34 eine abschwenkbare obere Abdeckung 49 für das Kreissägeblatt 16, die um eine horizontale Längsachse 22 zur Anpassung an eine etwaige Schrägstellung des Kreissägeblattes verschwenkbar ist.

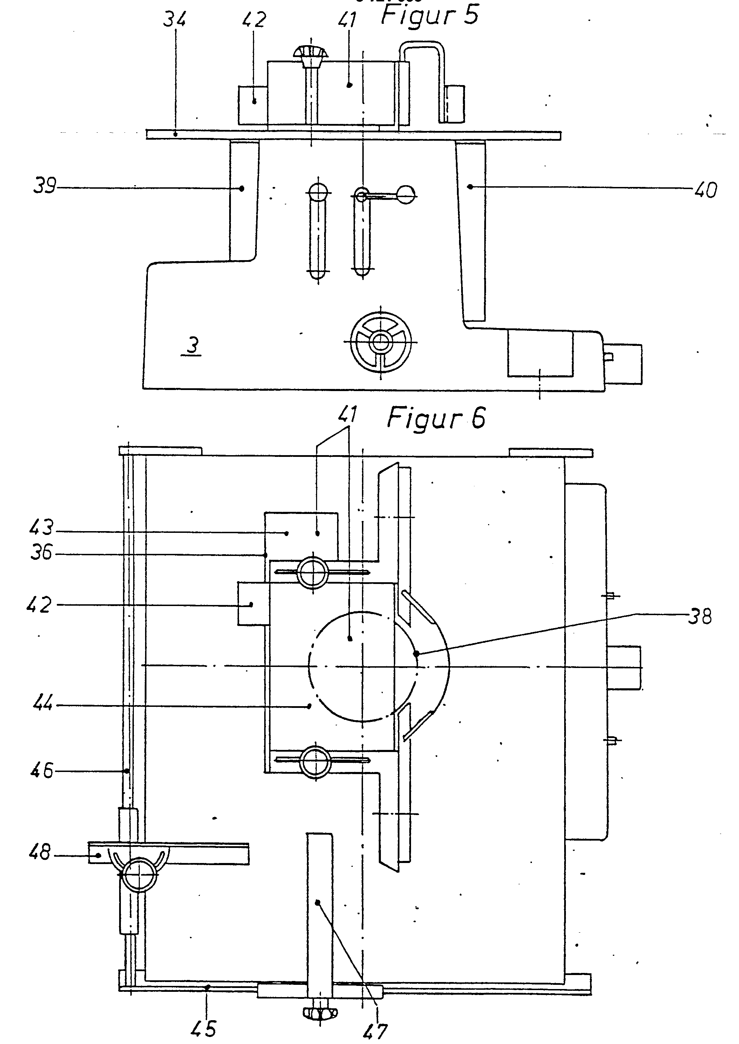

Gemäß den Figuren 4 und 6 kann auf dem Säge- und Frästisch 34 auch eine Frässchutzhaube 41 lösbar befestigt sein, die einen Absaugstutzen 42 für eine Staub- und Späneabsaugung aufweist und mit einem unteren Haubenteil 43 in die Durchtrittsöffnung 36 des Säge- und Frästisches 34 eingepaßt ist und ein oberes Haubenteil 44 aufweist, das zur Justierung gegenüber dem Fräswerkzeug 38 zum unteren Haubenteil 43 relativ verschiebbar ist.

Gemäß Figur 6 weist der Säge- und Frästisch 34 eine Aufnahme 45 für einen Parallelanschlag 47 und eine Führung 46 für ein Gehrungslineal 48 auf.

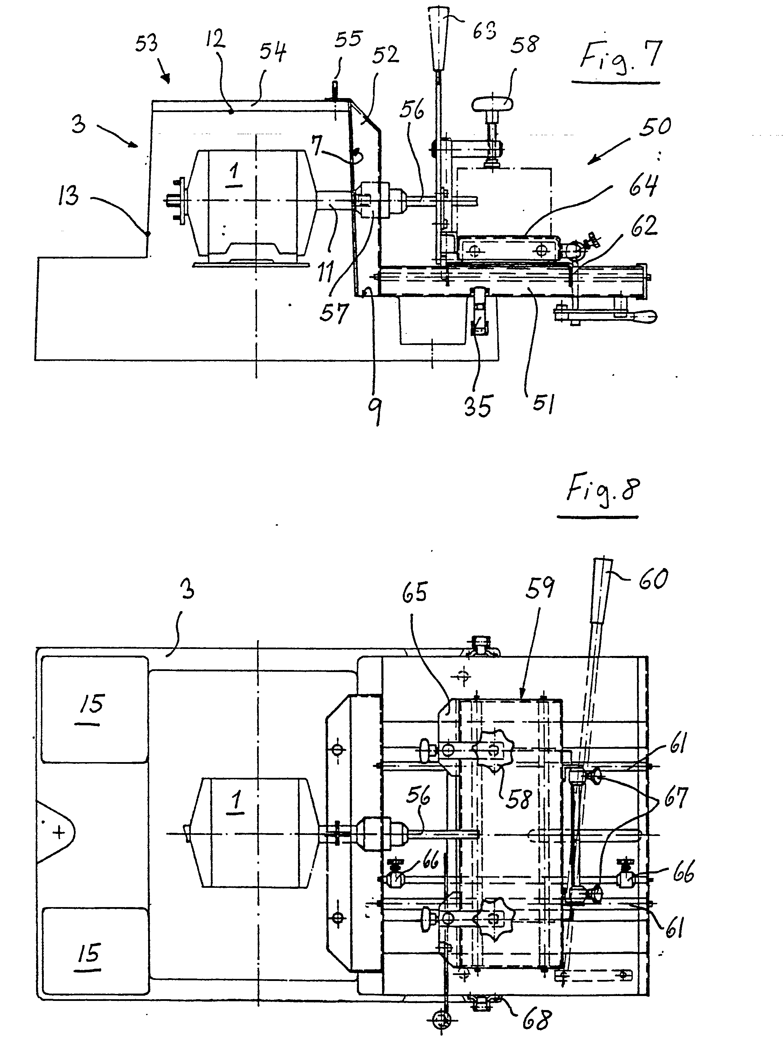

Figur 7 zeigt schematisch das in den Figuren 1 und 2 dargestellte Grundmodell, an dem eine Langlochbohreinrichtung 50 montiert ist. Letztere liegt mit einer Konsole 51 auf der dritten Montagefläche 9 des Grundmodells auf.

Vorgesehen ist ferner eine Schutzhaube 53, die mit einer oberen Abdeckplatte 54 auf der ersten Montagefläche 5 des Grundmodells aufliegt, hier durch die Zentrierstifte 17 lagesicher gehalten ist und die obere Durchtrittsöffnung 12 sowie die seitliche Durchtrittsöffnung 13 des Maschinengehäuses 3 durch nicht erkennbare Abdeckungen verschließt. Die vorstehend genannte Haube 52 übergreift die obere Abdeckplatte 54 der Schutzhaube 53 und ist hier bei 55 lösbar verriegelt. Bei dieser lösbaren Verriegelung kann es sich z. B. um einen oder mehrere Knebel handeln, die verdrehbar in der Oberseite der oberen Abdeckplatte 54 gelagert sind und durch Ausnehmungen im überkragenden Teil der Haube 52 ragen. Ein einen Bohrer 56 aufnehmendes Bohrfutter 57 ist auf der horizontal liegenden Arbeitsspindel 11 des Arbeitsmotors 1 montiert und ragt durch eine entsprechende Ausnehmung in der Haube 52. Auf der Konsole 51 ist ein mit einem Werkstückspanner 58 ausgerüsteter Kreuzschlitten 59 angeordnet, der einen in Achsrichtung der Arbeitsspindel 11 mit einem Handhebel 60 auf Führungsrohren 61 verschiebbaren Längsschlitten 62 und einen quer hierzu mit einem zweiten Handhebel 63 verschiebbaren Querschlitten 64 aufweist. Vorgesehen sind ferner ein Werkstückanschlag 65, Längsanschläge 66, Queranschläge 67 sowie Haken 68, die von den der dritten Montagefläche 9 zugeordneten Schnellverschlüssen 35 übergriffen werden.

Die Langlochbohreinrichtung 50 kann somit nur montiert werden, nachdem die Schutzhaube 53 aufgesetzt ist, so daß immer eine Abdeckung der Durchtrittsöffnungen 12 und 13 gewährleistet ist.

Die Langlochbohreinrichtung 50 gemäß den Figuren 7 und 8 kann auch als eigenständiges Arbeitsaggregat verwendet werden. Vorgesehen sind dann ein eigener Arbeitsmotor 69 mit Arbeitsspindel 70, eine zur Vertikalverstellung dienende schwenkbare Motoraufhängung 71 sowie Anbaufüße 72 und Schienen 73, an denen das Aggregat durch Klemmschrauben 74 festgelegt werden kann.

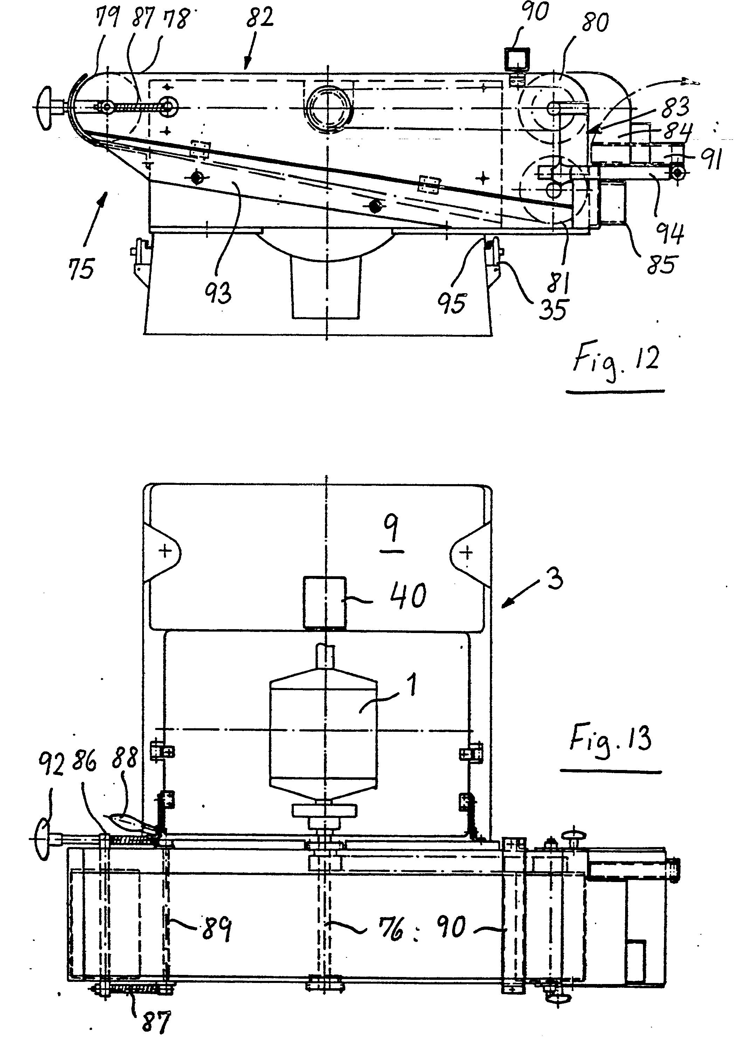

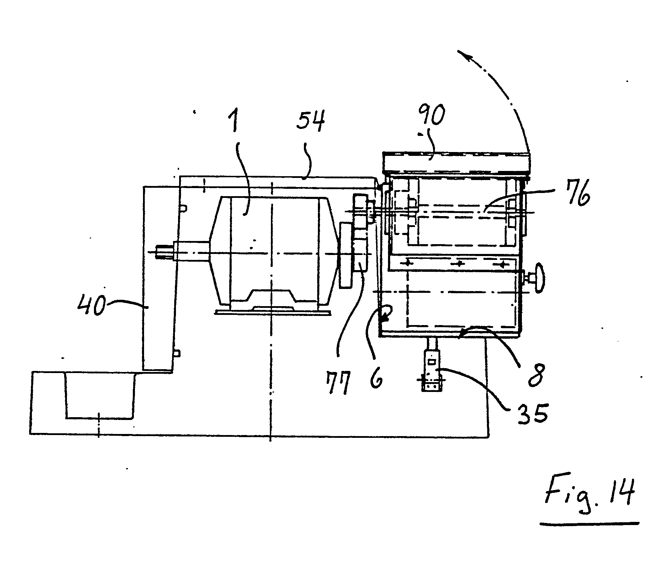

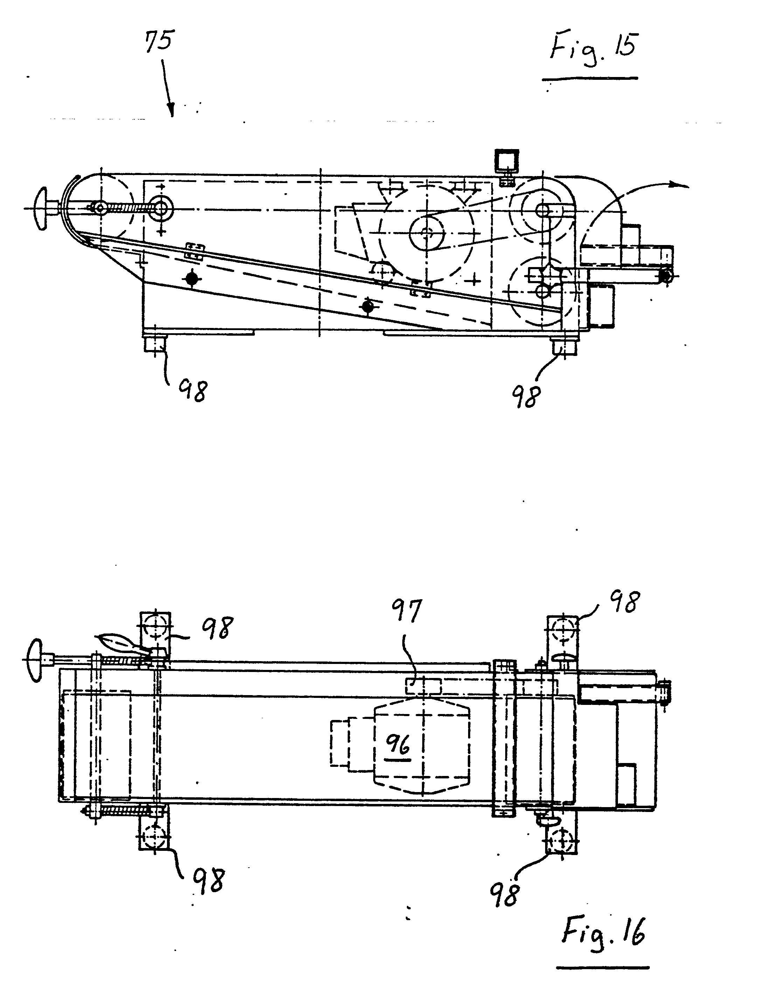

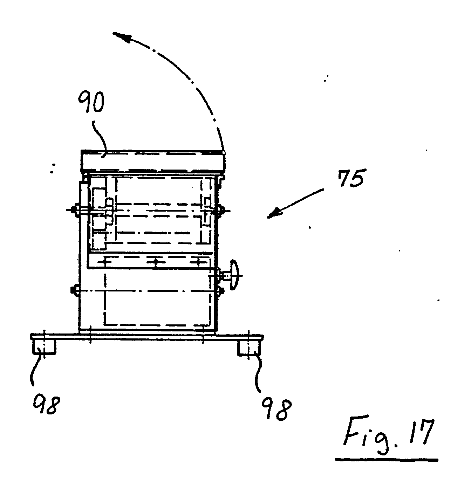

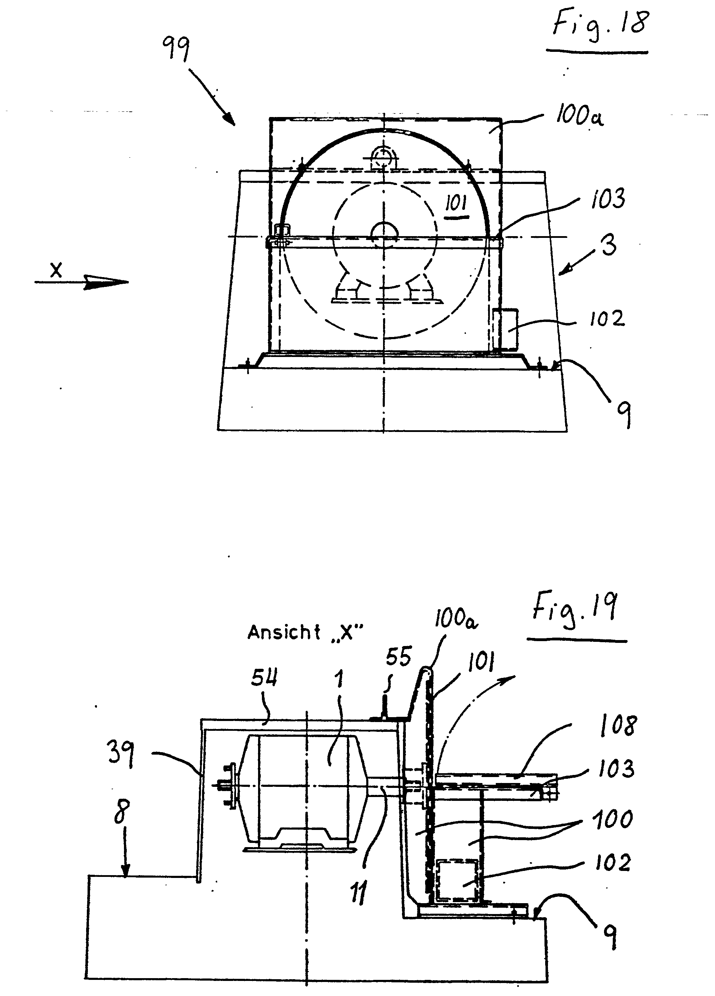

Die Figuren 12 bis 14 zeigen eine am Grundmodell montierte Bandschleifmaschine 75. Diese liegt auf der zweiten Montagefläche 8 des Grundmodells auf.

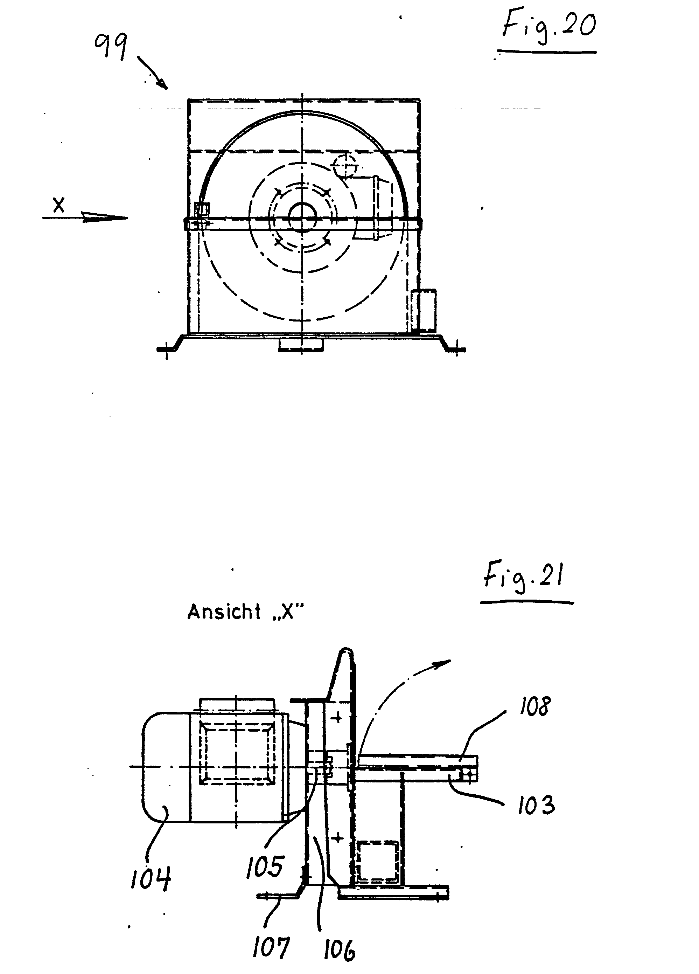

Figur 14 läßt ferner erkennen, daß die obere Abdeckplatte 54 der Schutzhaube 53 an der Bandschleifmaschine 75 angelenkt ist, die durch die Durchtrittsöffnung 13 des Maschinengehäuses 3 mit einer Vorgelegewelle 76 ragt, die von der Arbeitsspindel 10 des Arbeitsmotors 1 über einen Flachriemen 77 angetrieben ist. Das Schleifband 78 ist um eine verstellbare Rolle 79 und um zwei feste Rollen 80, 81 geführt und bildet eine horizontale Schleiffläche 82 sowie eine vertikale Schleiffläche 83, denen jeweils ein Absaugstutzen 84, 85 zugeordnet ist. Das Lager 86 der verstellbaren Rolle 79 ist durch zumindest eine Feder 87 beaufschlagt, die über einen von einem Handhebel 88 betätigbaren Exzenter 89 entspannbar ist. In den Bereich der horizontalen Schleiffläche 82 sind ein Queranschlag 90 und in den Bereich der vertikalen Schleiffläche 83 ein Längsanschlag 91 einschwenkbar.

Der Flachriemen 77 läßt sich durch Vertikalverstellung des Arbeitsmotors 1 spannen. Da die Schutzhaube bzw. deren obere Abdeckplatte 54 fest mit der Bandschleifmaschine 75 verbunden ist, sind die Durchtrittsöffnungen 12, 14 des Maschinengehäuses 3 bzw. die Arbeitsspindel 11 einmal durch die obere Abdeckung 54 selbst und zum anderen durch die Abdeckung 40 abgedeckt. Durch Betätigung einer Schraube 92 läßt sich der Bandlauf einstellen. Durch Betätigung des Handhebels 88 läßt sich das Schleifband 78 zum Bandwechsel entspannen. Vorgesehen ist ferner eine untere Abdeckklappe 93 zur Abdeckung des unteren Bandlaufes. Für Schleifarbeiten an der vertikalen Schleiffläche 83 ist ein Tisch 94 vorgesehen, an dem der Längsanschlag 91 angelenkt ist. Der der horizontalen Schleiffläche 82 zugeordnete Absaugstutzen 84 ist abnehmbar, während der der vertikalen Schleiffläche 83 zugeordnete Absaugstutzen 85 fest angeordnet ist. Schließlich sind Haken 95 für die Schnellverschlüsse 35 vorgesehen.

Die Figuren 15 bis 17 zeigen die Bandschleifmaschine 75 als selbständiges Arbeitsaggregat. Hier fehlen lediglich die Schutzhaube 53 bzw. die obere Abdeckplatte 54 mit der Abdeckung 40. Vorgesehen sind ein eigener Antriebsmotor 96 mit einer Riemenscheibe 97 sowie Anbaufüße 98.

Die Figuren 18 und 19 zeigen eine am Grundmodell montierte Tellerschleifmaschine 99. Diese liegt mit ihrem Gehäuse 100 auf der dritten Montagefläche 9 des Grundmodells auf. Das Gehäuse 100 deckt die untere Hälfte des Schleiftellers 101 ab, weist hier einen Absaugstutzen 102 auf, bildet in halber Höhe des Schleiftellers 101 einen Tisch 103, übergreift mit einem oberen Gehäuseteil 100a die obere Abdeckplatte 54 der Schutzhaube und ist hier lösbar verriegelt. Der Schleifteller 101 ist auf der horizontal liegenden Arbeitsspindel 11 des Arbeitsmotors 1 montiert.

Auch hier ist somit die vorherige Anordnung der Schutzhaube 53 erforderlich, damit die Tellerschleifmaschine 99 überhaupt montiert werden kann. Die Schutzhaube 53 deckt die Durchtrittsöffnungen 12 und 13 des Maschinengehäuses 3 ab.

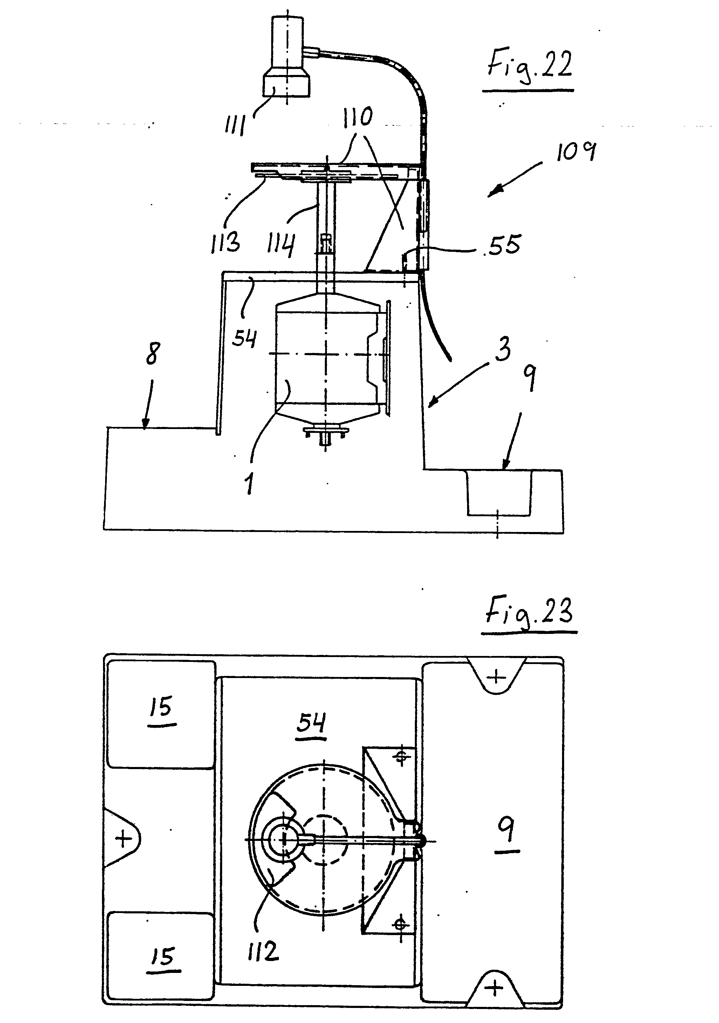

Die Figuren 20 und 21 zeigen die Tellerschleifmaschine 99 als eigenständiges Arbeitsaggregat mit eigenem Arbeitsmotor 104 mit Arbeitsspindel 105. Außerdem sind eine Motoraufhängung 106 sowie Anbaufüße 107 vorgesehen.

Die Tellerschleifmaschine 99 kann zusätzlich mit einem um 45° verstellbaren Werkstückanschlag 108 ausgerüstet sein.

Die Figuren 22 und 23 zeigen eine am Grundmodell montierte Sichtschleifeinrichtung 109. Diese stützt sich mit ihrem Gehäuse 110 auf der oberen Abdeckplatte 54 der Schutzhaube 53 ab und ist mit ihr bei 55 lösbar verriegelt. Das Gehäuse weist eine Lampe 111 auf und deckt bis auf einen Fensterausschnitt 112 eine horizontale Sichtschleifscheibe 113 ab, die über einen

Aufnahmedorn 114 an der lotrechten Arbeitsspindel 11 des Arbeitsmotors 1 befestigt ist.

Auch hier ist somit eine Montage der Sichtschleifeinrichtung 109 erst dann möglich, wenn zuvor die Schutzhaube 53 montiert ist, die die Durchtrittsöffnungen 13, 14 des Maschinengehäuses 3 und die obere Durchtrittsöffnung 12 bis auf ein Durchtrittsloch für den Aufnahmedorn 114 abdeckt.

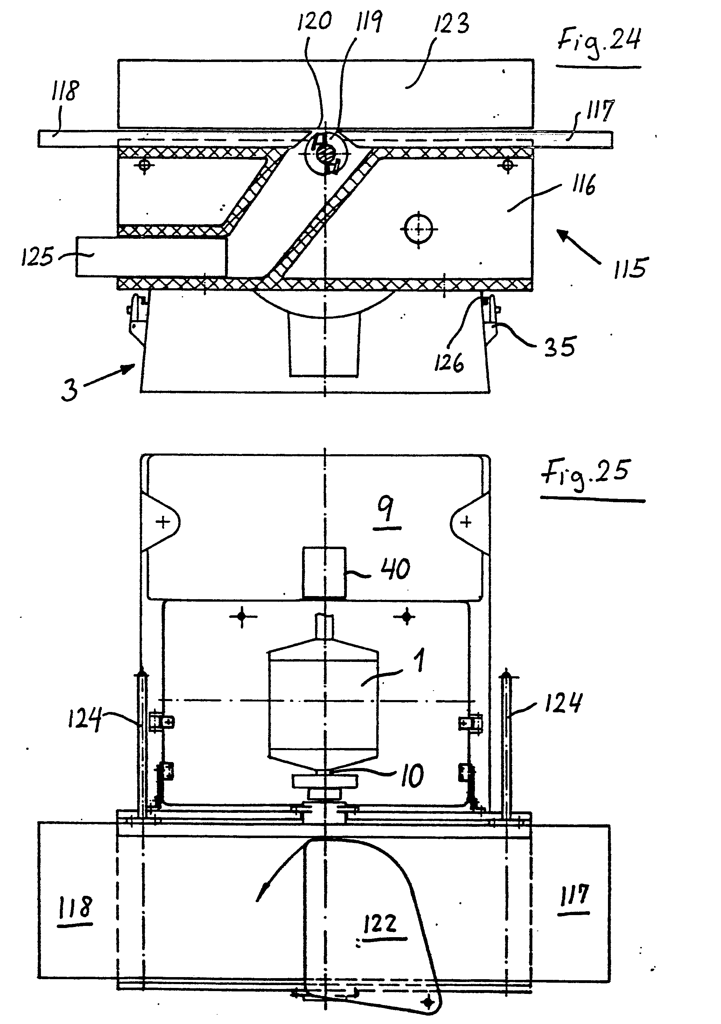

Die Figuren 24 bis 26 zeigen eine am Grundmodell montierte Abrichthobelmaschine 115. Diese liegt mit ihrem Gehäuse 116 auf der zweiten Montagefläche 8 des Grundmodells auf.

Die Abrichthobelmaschine 115 weist einen Aufgabetisch 117, einen Abnahmetisch 118 sowie eine horizontale Messerwelle 119 auf, die teilweise durch einen Arbeitsspalt 120 des Aufgabetisches 117 hindurchragt und über einen Flachriemen 121 von der horizontalen Arbeitsspindel 10 des Arbeitsmotors 1 angetrieben wird.

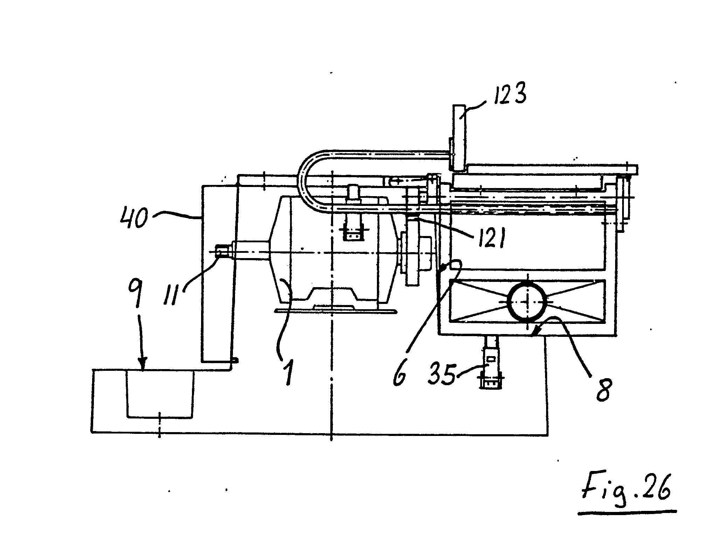

Insbesondere Figur 26 läßt erkennen, daß die Schutzhaube 53 bzw. deren obere Abdeckklappe 54 an der Abrichthobelmaschine 115 angelenkt ist und die Durchtrittsöffnungen 12, 14 des Maschinengehäuses 3 durch die obere Abdeckung 54 bzw. die Abdeckung 40 abdeckt.

Der Flachriemen 121 wird durch Vertikalverstellung des Arbeitsmotors 1 gespannt. Auf dem Aufgabetisch 117 ist ein in einer Horizontalebene verschwenkbarer Schwenkschutz 122 angelenkt. Außerdem sind ein Parallelanschlag 123 mit Führungsstangen 124, ein Absaugstutzen 125 sowie Haken 126 für die Schnellverschlüsse 35 vorgesehen.

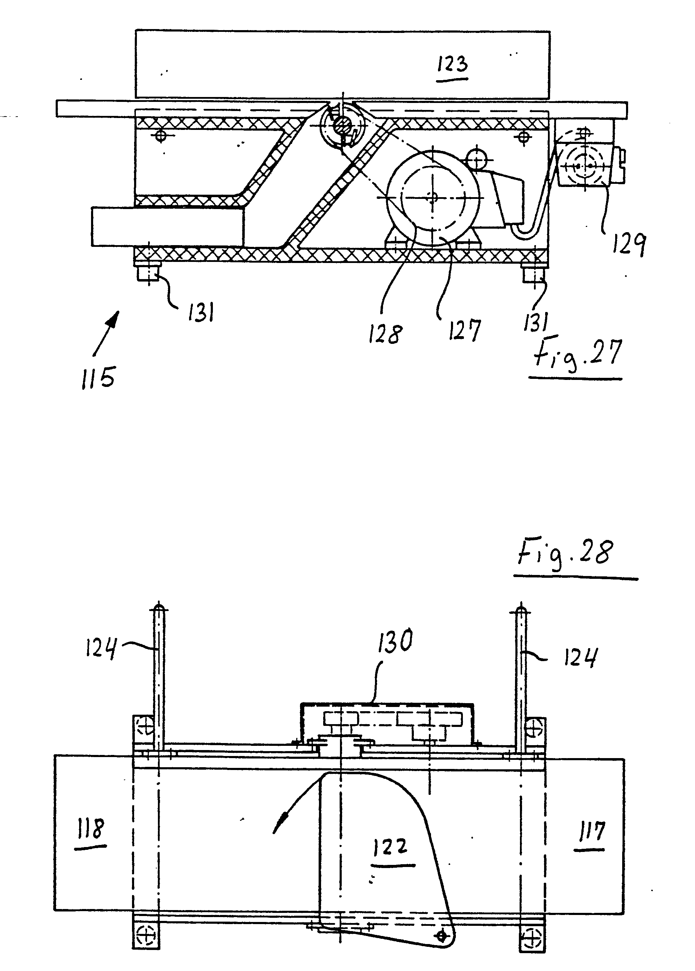

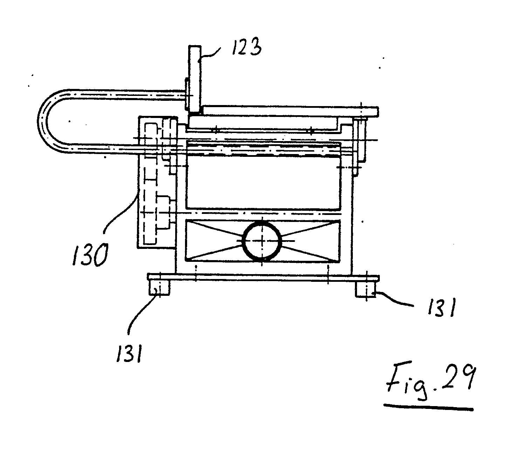

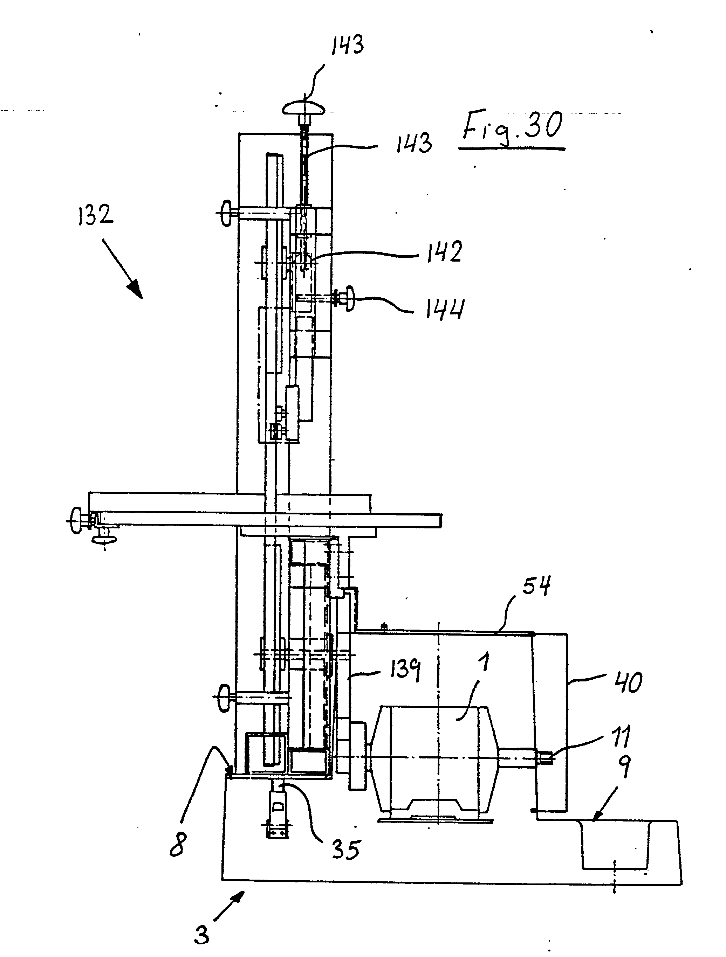

Die Figuren 27 bis 29 zeigen die Abrichthobelmaschine 115 als selbständiges Arbeitsaggregat mit eigenem Antriebsmotor 127 mit Riemenscheibe 128, einer Brems-Schalter-Stecker-Kombination 129, einer den Riemenantrieb abdeckenden Schutzhaube 130 sowie Anbaufüßen 131. Nicht vorhanden sind die obere Abdeckplatte 54 sowie die Abdeckung 40.

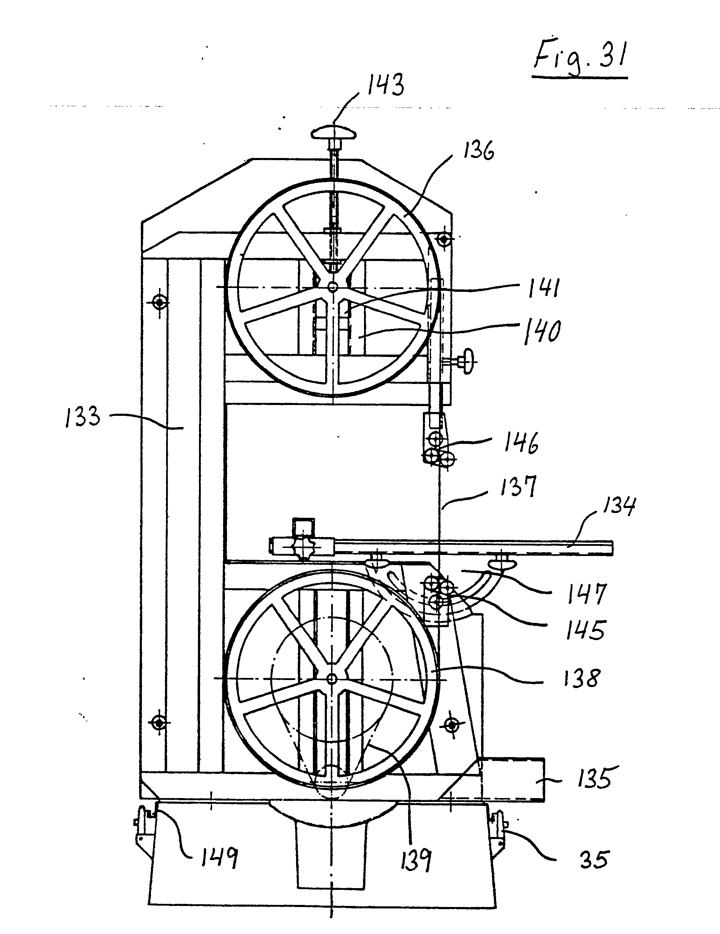

Die Figuren 30 und 31 zeigen eine am Grundmodell montierte Bandsäge 132. Diese liegt mit ihrem Rahmengehäuse 133 auf der zweiten Montagefläche 8 des Grundmodells auf.

Die Bandsäge 132 weist einen Sägetisch 134, einen Absaugstutzen 135, ein oberes verstellbares Rad 136 für das Sägeband 137 sowie ein unteres Antriebsrad 138 auf, das von der horizontalen Antriebsspindel 10 des Antriebsmotors 1 über einen Flachriemen 139 angetriebenist. Am Rahmengehäuse 133 ist die Schutzhaube 53 bzw. deren obere Abdeckplatte 54 befestigt.

Das obere Rad 136 ist lotrecht verstellbar und aus seiner Vertikalebene heraus verschwenkbar. Für die Vertikalverstellung sind eine Führungsschiene 140 für einen U-förmigen Schieber 141 mit einer Schwenkmutter 142 sowie eine von Hand verstellbare Spindel 143 vorgesehen, während die genannte Verschwenkung des oberen Rades 136 über eine von Hand verstellbare Spindel 144 erfolgt. Für das Sägeband 137 sind eine untere Sägebandführung 145 und eine obere, vertikal verstellbare Sägebandführung 146 vorgesehen.

Die Bandsäge 132 weist ferner eine Tischkonsole 147, den aus seiner horizontalen Ebene heraus verschwenkbaren und in der gewünschten Position arretierbaren Sägetisch 134 sowie Haken 149 für die Schnellverschlüsse 35 auf.

Die Schutzhaube 53 deckt mit ihrer oberen Abdeckplatte 54 die obere Durchtrittsöffnung 12 und mit ihrer Abdeckung 40 die Durchtrittsöffnung 14 des Maschinengehäuses 3 bzw. die Arbeitsspindel 11 des Arbeitsmotors 1 ab. Der Flachriemen 139 wird durch Vertikalverstellung des Arbeitsmotors 1 gespannt.

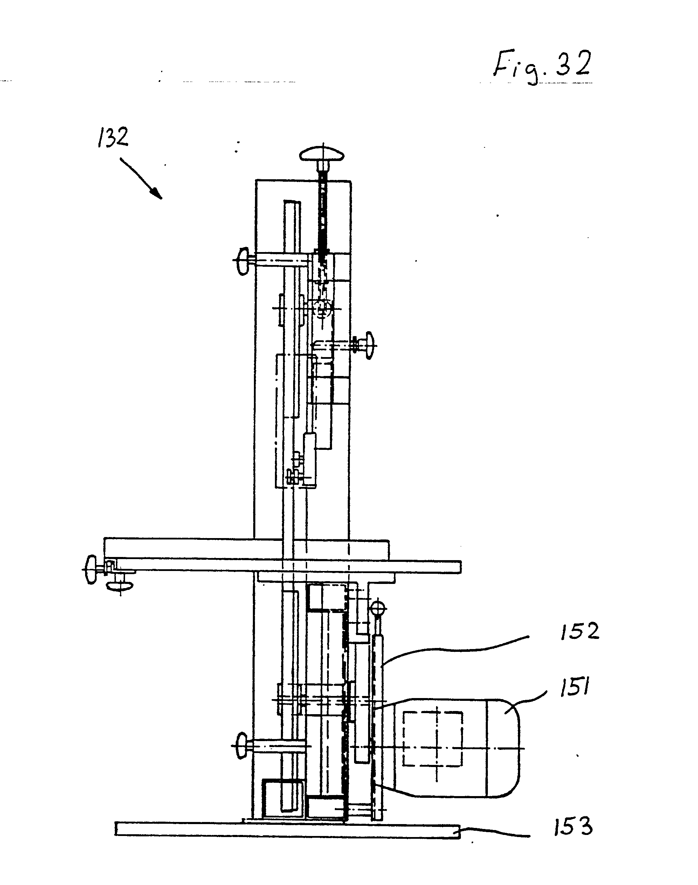

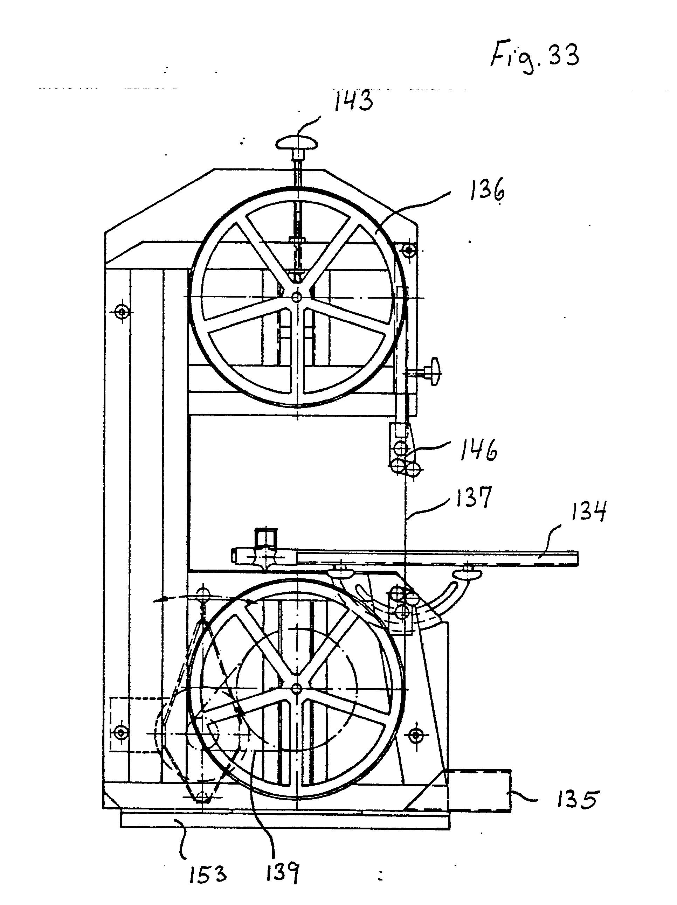

Die Figuren 32 und 33 zeigen die Bandsäge 132 als eigenständiges Arbeitsaggregat, das jedoch nicht mit der oberen Abdeckplatte 54 und der Abdeckung 40 versehen ist. Statt dessen sind ein eigener Antriebsmotor 151 mit einer Motoraufhängung 152 sowie Anbaufüße 153 vorgesehen.

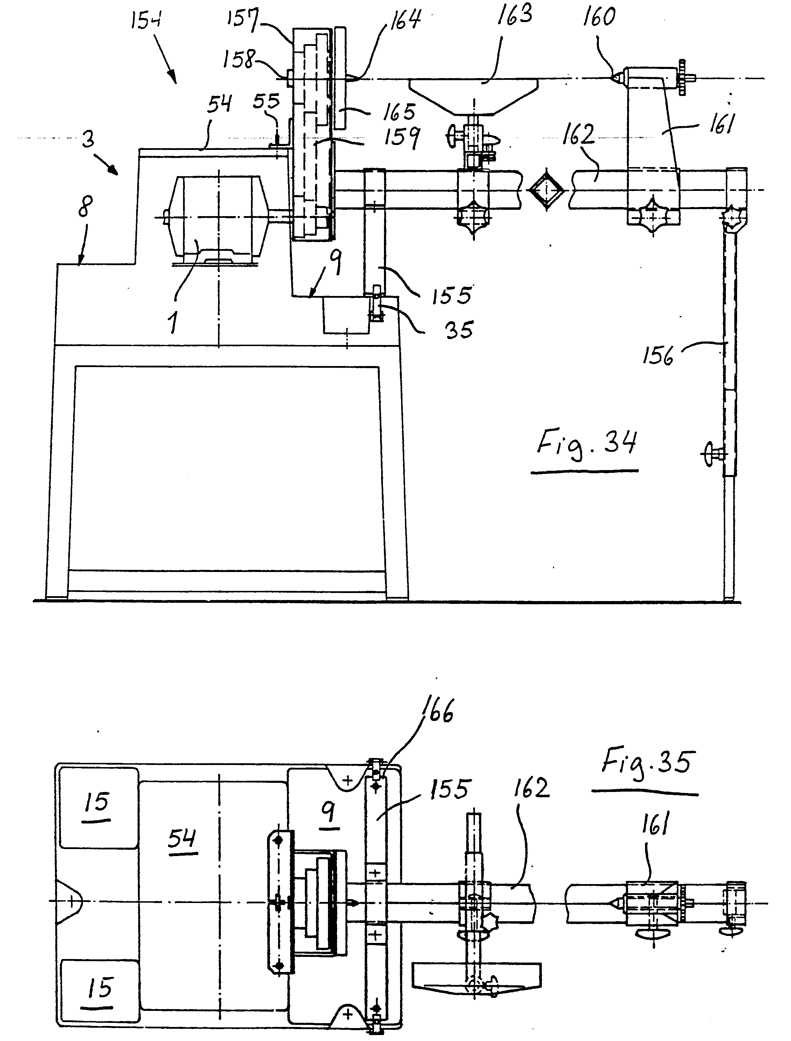

Die Figuren 34 und 35 zeigen eine am Grundmodell montierte Drechselmaschine 154. Diese stützt sich über einen Fuß 155 auf der dritten Montagefläche 9 des Grundmodells und über eine höhenverstellbare Stütze 156 auf dem Fußboden ab. Die Drechselmaschine 154 weist einen Spindelkasten 157 auf, der sich auf der oberen Abdeckplatte 54 der Schutzhaube 53 abstützt und mit ihr lösbar bei 55 verriegelt ist. Im Spindelkasten 157 ist eine Arbeitsspindel 158 gelagert, die über einen Keilriementrieb 159 von der Arbeitsspindel 11 des Arbeitsmotors 1 angetrieben ist und mit einer mitlaufenden Körnerspitze 160 eines Reitstockes 161 fluchtet, der auf einem horizontalen, am Spindelkasten 157 befestigten Tragrohr 162 verschiebbar und arretierbar geführt ist. Auf dem Tragrohr 162 ist ferner eine höhenverstellbare Handauflage 163 verschiebbar und arretierbar geführt.

Die Schutzhaube 53 verdeckt durch ihre obere Abdeckplatte 54 sowie durch ihre Abdeckung 39 die Durchtrittsöffnungen 12 und 13 im Maschinengehäuse 3. Auch hier kann die Drechselmaschine 154 nur dann montiert werden, wenn zuvor die Schutzhaube 53 angebracht worden ist.

Die Arbeitsspindel 158 kann wahlweise mit einem Stirnmitnehmer 164 oder einer Planscheibe 165 bestückt sein. Der Fuß 155 ist mit Haken 166 für die Schnellverschlüsse 35 bestückt.

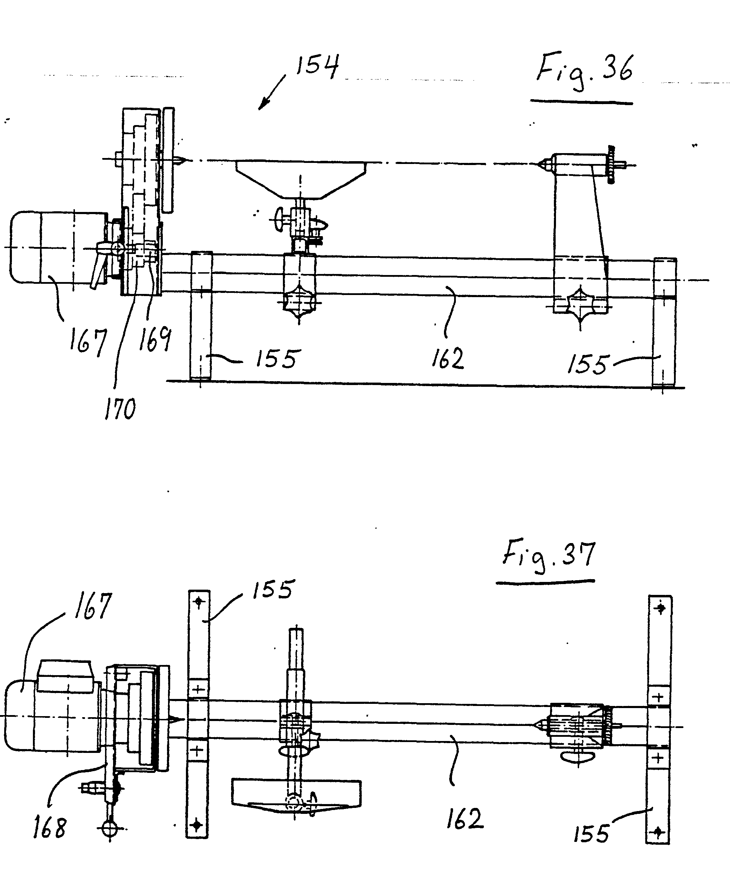

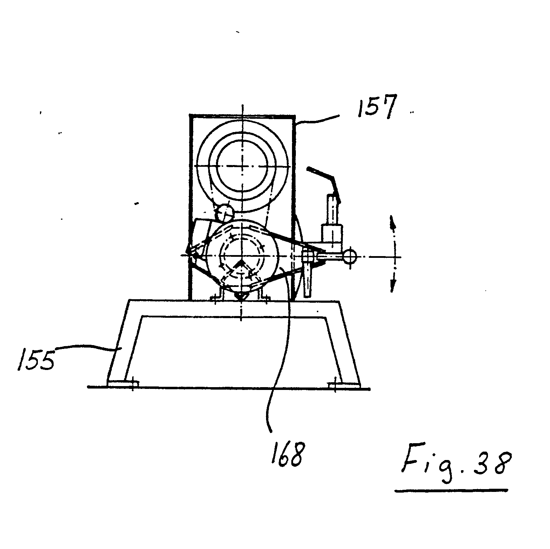

Die Figuren 36 bis 38 zeigen die Drechselmaschine 154 als eigenständiges Arbeitsaggregat. Vorgesehen ist ein eigener Antriebsmotor 167, der in einer verschwenkbaren Motoraufhängung 168 aufgenommen ist. Auf der Antriebsspindel 169 des Antriebsmotors 167 sitzt eine Keilriemenscheibe 170. Die höhenverstellbare Stütze 156 ist durch einen weiteren Fuß 155 ersetzt.

Soweit bei den vorstehend beschriebenen Ausführungsformen die einzelnen Zusatzgeräte auch als eigenständiges Arbeitsaggregat mit eigenem Arbeitsmotor verwendet werden können, ist eine Brems-Schalter-Stecker-Kombination vorgesehen, wie sie in Figur 27 unter dem Bezugszeichen 129 dargestellt ist.

**Patentansprüche**

1. Universalmaschine für die Holz-/Kunststoffbearbeitung mit einem innerhalb eines Maschinengehäuses (3) in einer Höhenverstelleinrichtung (4) gelagerten Arbeitsmotor (1), der mit seiner Motorwelle, deren Enden als Arbeitsspindeln (10, 11) ausgebildet sind, über eine Verschwenkeinrichtung (2) aus einer horizontalen in eine vertikale Stellung verschwenkbar ist, gekennzeichnet durch folgende Merkmale:

a) Das Maschinengehäuse (3) umschließt den Arbeitsmotor allseitig und wird nach oben von einer ersten horizontalen Montagefläche (5) begrenzt und weist eine zweite und eine tiefergelegene dritte horizontale Montagefläche (8, 9) auf, wobei sich die zweite ausgehend von einer Seitenwandung (6) und die dritte von einer dieser Seitenwandung (6) gegenüberliegenden Seitenwandung (7) des Gehäuses nach außen erstrecken, und wobei diese drei Montageflächen (5, 8, 9) einen integralen Bestandteil des Maschinengehäuses (3) bilden;

b) in der ersten Montagefläche (5) sowie in der der dritten Montagefläche (9) zugeordneten Seitenwandung (7) ist je eine Durchtrittsöffnung (12, 14) vorgesehen, durch die die eine Arbeitsspindel (11) bei vertikaler bzw. horizontaler Stellung des Arbeitsmotors (1) hindurchragt;

c) die der zweiten Montagefläche (8) zugewandte Seitenwandung (6) weist eine Durchtrittsöffnung (13) auf, die mit der anderen Arbeitsspindel (10) fluchtet, wenn diese horizontal ausgerichtet ist;

d) zumindest die erste und zweite Montagefläche (5, 8) sind mit Zentrierelementen bestückt zur lösbaren Aufnahme einer Schutzhaube (53) sowie auswechselbarer, eigenständiger Arbeitsgeräte (50, 75, 99, 109, 115, 132, 154).

2. Universalmaschine nach Anspruch 1, dadurch gekennzeichnet, daß die Schutzhaube (53) eine obere, auf der ersten Montagefläche (5) aufliegende Abdeckplatte (54) sowie Abdeckungen (39, 40) für die für das jeweilige Arbeitsgerät (50, 75, 99, 109, 115, 132, 154) nicht benötigten Durchtrittsöffnungen (12, 13, 14) des Maschinengehäuses (3) bzw. für die aus diesem herausragende Arbeitsspindel (11) aufweist.

3. Universalmaschine nach Anspruch 1 oder 2, dadurch gekennzeichnet, daß jede Montagefläche (5, 8, 9) stirnseitig mit Schnellverschlüssen (35) zur Festlegung der Schutzhaube (53) bzw. der einzelnen Arbeitsgeräte (50, 75, 99, 109, 115, 132, 154) bestückt ist.

4. Universalmaschine nach Anspruch 1, 2 oder 3, dadurch gekennzeichnet, daß die ersten Seitenwandungen (6, 7) mit der jeweils zugeordneten Montagefläche (8, 9) einen angenähert rechten Winkel einschließen.

5. Universalmaschine nach einem der vorhergehenden Ansprüche, dadurch gekennzeichnet, daß die zweite Montagefläche (8) höher liegt als die dritte Montagefläche (9).

6. Universalmaschine nach einem der vorhergehen den Ansprüche, dadurch gekennzeichnet, daß die zweite Montagefläche (8) zwei Teilflächen (15) aufweist, zwischen denen eine kreissegmentförmige Ausnehmung vorgesehen ist, die auch als Durchtrittsöffnung (13) in der zugeordneten Seitenwandung (6) zur Aufnahme eines Kreissägeblattes (16) dient.

7. Universalmaschine nach einem der vorhergehenden Ansprüche, dadurch gekennzeichnet, daß die zweite und dritte Montagefläche (8, 9) lotrechte Absenkungen (18) mit Bodenlöchern (19) aufweisen.

8. Universalmaschine nach einem der vorhergehenden Ansprüche, dadurch gekennzeichnet, daß in der der dritten Montagefläche (9) zugeordneten Seitenwandung (7) die für die Arbeitsspindel (11) vorgesehene Durchtrittsöffnung (14) als lotrechtes Langloch ausgebildet ist.

9. Universalmaschine nach einem der vorhergehenden Ansprüche, dadurch gekennzeichnet, daß das Maschinengehäuse (3) eine untere Abdeckung (20) sowie einen darüber angeordneten Absaugstutzen (21) für eine Staub- und Späneabsaugung aufweist.

10. Universalmaschine nach einem der vorhergehenden Ansprüche, dadurch gekennzeichnet, daß die Verschwenkeinrichtung (2) für den Arbeitsmotor (1) eine horizontale, senkrecht zur Motorwelle liegende Verschwenkachse (22) aufweist, um die der Arbeitsmotor um zumindest 135° stufenlos schwenkbar und in der gewünschten Schwenkstellung arretierbar ist.

11. Universalmaschine nach einem der vorhergehenden Ansprüche, dadurch gekennzeichnet, daß die Höhenverstelleinrichtung (4) für den Arbeitsmotor (1) zwei im Bereich der zweiten Seitenwandungen (23, 24) angeordnete, synchron antreibbare Vertikalspindeln (25) sowie zwei dazu parallel liegende Führungsstangen (26) aufweist, an denen eine Motoraufnahme (27) höhenverstellbar geführt ist.

12. Universalmaschine nach Anspruch 11, dadurch gekennzeichnet, daß der Antrieb der beiden Vertikalspindeln (25) über ein in einer Seitenwandung (23) gelagertes Handrad (28) und zwei Kegelradpaare (29) erfolgt.

13. Universalmaschine nach einem der vorhergehenden Ansprüche, gekennzeichnet durch eine den Arbeitsmotor (1) in der jeweils eingestellten Höhenlage festklemmende Blockiereinrichtung, die ein Klemm-Handrad (30) aufweist.

14. Universalmaschine nach einem der vorhergehenden Ansprüche, dadurch gekennzeichnet, daß die Motoraufnahme (27) ein Führungsrohr (31) aufweist, in dem eine Spaltkeilhalterung lösbar aufgenommen ist und durch eine Klemmschraube (32) blockiert ist.

15. Universalmaschine nach einem der vorhergehenden Ansprüche, dadurch gekennzeichnet, daß die bei lotrechter Lage der Motorwelle durch die erste Montagefläche (5) ragende Arbeitsspindel (11) in einem verstärkten Lagerschild (33) mit verstärkter Lagerung gelagert ist.

16. Universalmaschine nach einem der vorhergehenden Ansprüche, dadurch gekennzeichnet, daß das Maschinengehäuse (3) aus einer doppelten Kunststoffschale mit dazwischen ausgeschäumtem Kunststoff besteht.

17. Universalmaschine nach einem der Ansprüche 2 bis 16, gekennzeichnet durch einen auf der ersten Montagefläche (5) lösbar befestigten Säge- und Frästisch (34), der zugleich die Abdeckplatte (54) der Schutzhaube (53) bildet und eine Abdeckung (39) für die dem Kreissägeblatt (16) zugeordnete Durchtrittsöffnung (13) bzw. kreissegmentförmige Ausnehmung sowie eine Abdeckung (40) für die aus der gegenüberliegende Seitenwandung (7) ragende Arbeitsspindel (11) aufweist (Figuren 3 bis 6).

18. Universalmaschine nach Anspruch 17, dadurch gekennzeichnet, daß der Säge- und Frästisch (34) veränderbare Durchtrittsöffnungen (36, 37) für die Arbeitsspindel (11), das Kreissägeblatt (16) oder ein Fräswerkzeug (38) aufweist.

19. Universalmaschine nach Anspruch 17 oder 18, dadurch gekennzeichnet, daß der Säge- und Frästisch (34) eine abschwenkbare obere Abdeckung (49) für das Kreissägeblatt (16) trägt, die um eine horizontale Längsachse (22) zur Anpassung an eine etwaige Schrägstellung des Kreissägeblattes verschwenkbar ist.

20. Universalmaschine nach einem der Ansprüche 17 bis 19, dadurch gekennzeichnet, daß auf dem Säge- und Frästisch (34) eine Frässchutzhaube (41) lösbar befestigt ist.

21. Universalmaschine nach Anspruch 20, dadurch gekennzeichnet, daß die Frässchutzhaube (41) einen Absaugstutzen (42) für eine Staub- und Späneabsaugung aufweist.

22. Universalmaschine nach Anspruch 20 und 21, dadurch gekennzeichnet, daß die Frässchutzhaube (41) mit einem unteren Haubenteil (43) in die Durchtrittsöffnung (36) des Säge- und Frästisches (34) eingepaßt ist und ein oberes Haubenteil (44) aufweist, das zur Justierung gegenüber dem Fräswerkzeug (38) zum unteren Haubenteil (43) relativ verschiebbar ist.

23. Universalmaschine nach einem der Ansprüche 17 bis 22, dadurch gekennzeichnet, daß der Säge- und Frästisch (34) eine Aufnahme (45) für einen Parallelanschlag (47) und eine Führung (46) für ein Gehrungslineal (48) aufweist.

24. Universalmaschine nach einem der Ansprüche 2 bis 16, gekennzeichnet dürch eine mit einer Konsole (51) auf der dritten Montagefläche (9) aufliegende Langlochbohreinrichtung (50), die mit einer Haube (52) die obere Abdeckplatte (54) der Schutzhaube (53) übergreift und hier lösbar verriegelt (55) ist, während ein einen Bohrer (56) aufnehmendes Bohrfutter (57) auf der horizontal liegenden Arbeitsspindel (11) des Arbeitsmotors (1) montiert ist und durch eine entsprechende Ausnehmung in der Haube (52) ragt (Figuren 7 und 8).

25. Universalmaschine nach Anspruch 24, dadurch gekennzeichnet, daß auf der Konsole (51) ein mit einem Werkstückspanner (58) ausgerüsteter Kreuzschlitten (59) angeordnet ist, der einen in Achsrichtung der Arbeitsspindel (11) mit einem Handhebel (60) verschiebbaren Längsschlitten (62) und einen quer hierzu mit einem zweiten Handhebel (63) verschiebbaren Querschlitten (64) aufweist.

26. Universalmaschine nach einem der Ansprüche 2 bis 16, gekennzeichnet durch eine auf der zweiten Montagefläche (8) aufliegende Bandschleifmaschine (75), die fest mit der oberen Abdeckplatte (54) der Schutzhaube (53) verbunden ist und durch die Durchtrittsöffnung (13) des Maschinengehäuses (3) mit einer Vorgelegewelle (76) ragt, die von der Arbeitsspindel (10) des Arbeitsmotors (1) über einen Riemen (77) angetrieben ist (Figuren 12 bis 14).

27. Universalmaschine nach Anspruch 26, dadurch gekennzeichnet, daß das Schleifband (78) um eine verstellbare (79) und zwei feste (80, 81) Rollen geführt ist und eine horizontale (82) sowie eine vertikale (83) Schleiffläche bildet, denen jeweils ein Absaugstutzen (84, 85) zugeordnet ist.

28. Universalmaschine nach Anspruch 27, dadurch gekennzeichnet, daß das Lager (86) der verstellbaren Rolle (79) durch eine Feder (87) beaufschlagt ist, die über einen von einem Handhebel (88) betätigbaren Exzenter (89) entspannbar ist.

29. Universalmaschine nach Anspruch 27 oder 28, dadurch gekennzeichnet, daß in den Bereich der horizontalen Schleiffläche (82) ein Queranschlag (90) und in den Bereich der vertikalen Schleiffläche (83) ein Längsanschlag (91) einschwenkbar sind.

30. Universalmaschine nach einem der Ansprüche 2 bis 16, gekennzeichnet durch eine mit ihrem Gehäuse (100) auf der dritten Montagefläche (9) aufliegende Tellerschleifmaschine (99), deren Gehäuse (100) die untere Hälfte des Schleiftellers (101) abdeckt, hier einen Absaugstutzen (102) aufweist, in halber Höhe des Schleiftellers (101) einen Tisch (103) bildet, mit einem oberen Gehäuseteil (100a) die obere Abdeckplatte (54) der Schutzhaube (53) übergreift und hier lösbar verriegelt ist, während der Schleifteller (101) auf der horizontal liegenden Arbeitsspindel (11) des Arbeitsmotors (1) montiert ist (Figuren 18 und 19).

31. Universalmaschine nach einem der Ansprüche 2 bis 16, gekennzeichnet durch eine sich mit ihrem Gehäuse (110) auf der oberen Abdeckplatte (54) der Schutzhaube (53) abstützende und mit ihr lösbar verriegelte (55) Sichtschleifeinrichtung (109), deren Gehäuse (110) eine Lampe (111) aufweist und bis auf einen Fensterausschnitt (112) eine horizontale Sichtschleifscheibe (113) abdeckt, die über einen Aufnahmedorn (114) an der lotrechten Arbeitsspindel (11) des Arbeitsmotors (1) befestigt ist (Figuren 22 und 23).

32. Universalmaschine nach einem der Ansprüche 2 bis 16, gekennzeichnet durch eine mit ihrem Gehäuse (116) auf der zweiten Montagefläche (8) aufliegende Abrichthobelmaschine (115) mit einem Aufgabe- (117) und Abnahmetisch (118) und einer horizontalen, teilweise durch einen Arbeitsspalt (120) des Aufgabetisches (117) hindurchragenden Messerwelle (119), die über einen Riemen (121) von der horizontalen Arbeitsspindel (10) des Arbeitsmotors (1) angetrieben ist, wobei die Schutzhaube (53) an dem Gehäuse (116) angelenkt ist (Figuren 24 bis 26).

33. Universalmaschine nach einem der Ansprüche 2 bis 16, gekennzeichnet durch eine mit ihrem Rahmengehäuse (133) auf der zweiten Montagefläche (8) aufliegende Bandsäge (132) mit einem Sägetisch (134), einem Absaugstutzen (135), einem oberen verstellbaren Rad (136) für das Sägeband (137) und einem unteren Antriebsrad (138), das von der horizontalen Arbeitsspindel (10) des Arbeitsmotors (1) über einen Riemen (139) angetrieben ist, wobei die Schutzhaube (53) mit ihrer oberen Abdeckplatte (54) am Rahmengehäuse (133) befestigt ist (Figuren 30 und 31).

34. Universalmaschine nach Anspruch 33, dadurch gekennzeichnet, daß das obere Rad (136) lotrecht verstellbar und aus seiner Vertikalebene heraus verschwenkbar ist.

35. Universalmaschine nach Anspruch 33 oder 34, dadurch gekennzeichnet, daß der Sägetisch (134) aus seiner Horizontalebene heraus verschwenkbar und in der gewünschten Position arretierbar ist.

36. Universalmaschine nach einem der Ansprüche 2 bis 16, gekennzeichnet durch eine sich über einen Fuß (155) auf der dritten Montagefläche (9) und über eine höhenverstellbare Stütze (156) auf dem Fußboden abstützende Drechselmaschine (154) mit einem sich auf der oberen Abdeckplatte (54) der Schutzhaube (53) abstützenden und mit ihr lösbar verriegelten (55) Spindelkasten (157) mit einer Arbeitsspindel (158), die über einen Riementrieb (159) von der Arbeitsspindel (11) des Arbeitsmotors (1) angetrieben ist und mit einer mitlaufenden Körnerspitze (160) eines Reitstockes (161) fluchtet, der auf einem horizontalen, am Spindelkasten (157) befestigten Tragrohr (162) verschiebbar und arretierbar geführt ist (Figuren 34 und 35).

37. Universalmaschine nach Anspruch 36, dadurch gekennzeichnet, daß auf dem Tragrohr (162) verschiebbar und arretierbar eine höhenverstellbare Handauflage (163) geführt ist.

## Claims

1. General-purpose machine for wood/plastics working, with a working motor (1) which is mounted in a height adjuster (4) inside a machine housing (3) and which is pivotable together with its motor shaft, whose ends are constructed as working spindles (10, 11), by means of a pivot device (2) out of a horizontal into a vertical position, characterised by the following characteristics:

a) the machine housing (3) surrounds the working motor (1) on all sides and is bounded at the top by a first horizontal mounting surface (5) and comprises a second and a lower-level third horizontal mounting surface (8, 9), the second extending outwardly from a side wall (6) of the housing and the third extending outwardly from a side wall (7) opposite the latter side wall (6), and these three mounting surfaces (5, 8, 9) forming an integral part of the machine housing (3);

b) in each of the first mounting surface (5) and the side wall (7) associated with the third mounting surface (9) is provided an opening (12, 14) through which extends one working spindle (11) in the vertical or horizontal position of the working motor (1);

c) the side wall (6) facing towards the second mounting surface (8) comprises an opening (13) which is aligned with the other working spindle (10) when the latter is aligned horizontally;

d) at least the first and second mounting surfaces (5, 8) are fitted with centring elements for releasably holding a guard (53) and interchangeable independent tools (50, 75, 99, 109, 115, 132, 154).

2. General-purpose machine according to claim 1, characterised in that the guard (53) comprises an upper cover plate (54) resting on the first mounting surface (5) as well as covers (39, 40) for the openings (12, 13, 14) of the machine housing (3) not needed for the respective tool (50, 75, 99, 109, 115, 132, 154) or for the working spindle (11) protruding out of the machine housing (3).

3. General-purpose machine according to claim 1 or 2, characterised in that each mounting surface (5, 8, 9) is provided on its face with quick-release fastenings (35) for fixing the guard (53) or the individual tools (50, 75, 99, 109, 115, 132, 154).

4. General-purpose machine according to claim 1, 2 or 3, characterised in that the first side walls (6, 7) form an approximately right angle with the respectively associated mounting surface (8, 9).

5. General-purpose machine according to any of the preceding claims, characterised in that the second mounting surface (8) is higher than the third mounting surface (9).

6. General-purpose machine according to any of the preceding claims, characterised in that the second mounting surface (8) comprises two partial surfaces (15) between which is provided a circle segment-shaped recess which also serves as an opening (13) in the associated side wall (6) for receiving a circular saw blade (16).

7. General-purpose machine according to any of the preceding claims, characterised in that the second and third mounting surfaces (8, 9) comprise vertical cavities (18) with bottom holes (19).

8. General-purpose machine according to any of the preceding claims, characterised in that the opening (14) provided for passage of the working spindle (11) is formed as a vertical slot in the side wall (7) associated with the third mounting surface (9).

9. General-purpose machine according to any of the preceding claims, characterised in that the machine housing (3) comprises a lower cover (20) and, above the latter, a suction connection piece (21) for extraction of dust and cuttings.

10. General-purpose machine according to any of the preceding claims, characterised in that the pivot device (2) for the working motor (1) comprises a horizontal pivot axis (22) which is perpendicular to the motor shaft and about which the working motor is pivotable infinitely variably through at least 135° and can be locked in the desired pivot position.

11. General-purpose machine according to any of the preceding claims, characterised in that the height adjuster (4) for the working motor (1) comprises two synchronously driven vertical spindles (25) disposed in the region of the second side walls (23, 24), and parallel thereto two guide rods (26) on which a motor receptacle (27) is guided with adjustable height.

12. General-purpose machine according to claim 11, characterised in that the two vertical spindles (25) are driven by a hand wheel (28) mounted in one side wall (23), and two pairs of bevel gears (29).

13. General-purpose machine according to any of the preceding claims, characterised by a locking device which locks the working motor (1) at the height set at any given time and which comprises a locking handwheel (30).

14. General-purpose machine according to any of the preceding claims, characterised in that the motor receptacle (27) comprises a guide tube (31) in which a cleaver support is held releasably and locked by a locking screw (32).

15. General-purpose machine according to any of the preceding claims, characterised in that the working spindle (11) which extends through the first mounting surface (5) in the vertical position of the motor shaft, is mounted in a reinforced bearing plate (33) with reinforced bearings.

16. General-purpose machine according to any of the preceding claims, characterised in that the machine housing (3) consists of a double plastic shell with foam plastic in between.

17. General-purpose machine according to any of claims 2 to 16, characterised by a sawing and milling bench (34) which is releasably mounted on the first mounting surface (5) and which also forms the cover plate (54) of the guard (53), and a cover (39) for the opening (13) or circle segment-shaped recess associated with the circular saw blade (16), and a cover (40) for the working spindle (11) extending from the opposite side wall (7) (Figures 3 to 6).

18. General-purpose machine according to claim 17, characterised in that the sawing and milling bench (34) comprises variable openings (36, 37) for passage of the working spindle (11), the circular saw blade (16) or a milling tool (38).

19. General-purpose machine according to claim 17 or 18, characterised in that the sawing and milling bench (34) carries a swivel upper cover (49) for the circular saw blade (16) which is pivotable about a horizontal longitudinal axis (22) for adaptation to any inclined position of the circular saw blade.

20. General-purpose machine according to any of claims 17 to 19, characterised in that a milling guard (41) is releasably mounted on the sawing and milling bench (34).

21. General-purpose machine according to claim 20, characterised in that the milling guard (41) comprises a suction connection piece (42) for extraction of dust and cuttings.

22. General-purpose machine according to claims 20 and 21, characterised in that the milling guard (41) fits by a lower guard portion (43) in the opening (36) in the sawing and milling bench (34), and comprises an upper guard portion (44) which is displaceable relative to the lower guard portion (43) for adjustment relative to the milling tool (38).

23. General-purpose machine according to any of claims 17 to 22, characterised in that the sawing and milling bench (34) comprises a holder (45) for a parallel stop (47) and a guide (46) for a mitre rule (48).

24. General-purpose machine according to any of claims 2 to 16, characterised by a slot drill (50) which rests by a bracket (51) on the third mounting surface (9) and which by a cap (52) overlaps the upper cover plate (54) of the guard (53) and is releasably locked here (55), while a drill chuck (57) which receives a drill bit (56) is mounted on the horizontal working spindle (11) of the working motor (1) and extends through a corresponding recess in the cap (52) (Figures 7 and 8).

25. General-purpose machine according to claim 24, characterised in that on the bracket (51) is disposed a cross slide (59) which is equipped with a workpiece tightener (58) and which comprises a longitudinal slide (62) slidable by a hand lever (60) in the axial direction of the working spindle (11) and a transverse slide (64) slidable by a second hand lever (63) perpendicularly thereto.

26. General-purpose machine according to any of claims 2 to 16, characterised by a belt sander (75) which rests on the second mounting surface (8) and which is rigidly connected to the upper cover plate (54) of the guard (53) and extends through the opening (13) in the machine housing (3) by a transmission shaft (76) which is driven by the working spindle (10) of the working motor (1) by means of a belt (77) (Figures 12 to 14).

27. General-purpose machine according to claim 26, characterised in that the sanding belt (78) is guided around one adjustable (79) and two fixed (80, 81) rollers and forms one horizontal (82) and one vertical (83) sanding surface with each of which is associated a suction connection piece (84, 85).

28. General-purpose machine according to claim 27, characterised in that the bearing (86) of the adjustable roller (79) is loaded by a spring (87) which can be released by a cam (89) operated by a hand lever (88).

29. General-purpose machine according to claim 27 or 28, characterised in that a transverse stop (90) can be pivoted into the range of the horizontal sanding surface (82), and a longitudinal stop (91) can be pivoted into the range of the vertical sanding surface (83).

30. General-purpose machine according to any of claims 2 to 16, characterised by a disc sander (99) which rests by its housing (100) on the third mounting surface (9) and whose housing (100) covers the lower half of the sanding disc (101), comprises a suction connection piece (102) here, forms a bench (103) at mid-height of the sanding disc (101), overlaps the upper cover plate (54) of the guard (53) by an upper housing portion (100a) and is releasably locked here, while the sanding disc (101) is mounted on the horizontal working spindle (11) of the working motor (1) (Figures 18 and 19).

31. General-purpose machine according to any of claims 2 to 16, characterised by a grading sander (109) which is supported by its housing (110) on the upper cover plate (54) of the guard (53) and releasably locked (55) thereto and whose housing (110) comprises a lamp (111) and except for a cutaway portion (112) covers a horizontal grading sanding disc (113) which is attached by a holding mandrel (114) to the vertical working spindle (11) of the working motor (1) (Figures 22 and 23).

32. General-purpose machine according to any of claims 2 to 16, characterised by a surface planer (115) which rests by its housing (116) on the second mounting surface (8), with a feed bench (117) and delivery bench (118) and a horizontal blade shaft (119) which partially extends through a working gap (120) of the feed bench (117) and which is driven by means of a belt (121) by the horizontal working spindle (10) of the working motor (1), the guard (53) being coupled to the housing (116) (Figures 24 to 26).

33. General-purpose machine according to any of claims 2 to 16, characterised by a band saw (132) which rests by its frame housing (133) on the second mounting surface (8), with a sawing bench (134), a suction connection piece (135), an adjustable upper wheel (136) for the saw band (137) and a lower drive wheel (138) which is driven by the horizontal working spindle (10) of the working motor (1) by means of a belt (139), the guard (53) being attached by its upper cover plate (54) to the frame housing (133) (Figures 30 and 31).

34. General-purpose machine according to claim 33, characterised in that the upper wheel (136) is vertically displaceable and pivotable out of its vertical plane.

35. General-purpose machine according to claim 33 or 34, characterised in that the sawing bench (134) can be pivoted out of its horizontal plane and locked in the desired position.

36. General-purpose machine according to any of claims 2 to 16, characterised by a lathe (154) which is supported by a leg (155) on the third mounting surface (9) and by a strut (156) of adjustable height on the floor, with a headstock (157) supported on the upper cover plate (54) of the guard (53) and releasably locked (55) thereto, with a working spindle (158) which is driven by means of a belt (159) by the working spindle (11) of the working motor (1) and aligned with a revolving lathe centre (160) of a tailstock (161) which is guided slidably and lockably on a horizontal supporting tube (162) attached to the headstock (157) (Figures 34 and 35).

37. General-purpose machine according to claim 36, characterised in that a hand rest (163) of adjustable height is guided slidably and lockably on the supporting tube (162).

**Revendications**

1. Machine universelle pour l'usinage du bois ou des matières plastiques comportant un moteur (1) qui est supporté à l'intérieur d'un carter (3) dans un dispositif de réglage en hauteur (4) et qui, avec son arbre moteur dont les extrémité sont aménagées en broches (10, 11), peut pivoter d'une position horizontale à une position verticale, au moyen d'un dispositif de pivotement (2), caractérisée par les particularités suivantes:

a) le carter (3) enferme le moteur (1) de tous côtés, est limité vers le haut par une première surface de montage horizontale (5) et présente une deuxième surface de montage horizontale (8) qui s'étend vers l'extérieur à partir d'une première paroi latérale (6) du carter et une troisième surface de montage horizontale (9) placée plus bas, qui s'étend vers l'extérieur à partir d'une paroi latérale (7) du carter opposée à la première paroi latérale (6), ces trois surfaces de montage (5, 8, 9) constituant une partie intégrante du carter (3);

b) dans la première surface de montage (5), ainsi que dans la paroi latérale (7) associée à la troisième surface de montage (9) est prévu un orifice respectif (12, 14) à travers lequel fait saillie une première des broches (11) lorsque le moteur (1) est en position verticale et respectivement horizontale;

c) la paroi latérale (6) orientée vers la deuxième surface de montage (8) présente un orifice (13) aligné avec l'autre broche (10) lorsque celle-ci est disposée horizontalement;

d) la première et la deuxième surfaces de montage (5, 8) au moins sont équipées d'éléments de centrage, pour recevoir de manière amovible un capot protecteur (53) ainsi que des appareils d'usinage (50, 75, 99, 109, 115, 132, 154) autonomes et interchangeables.

2. Machine universelle selon la revendication 1, caractérisée en ce que le capot protecteur (53) présente une plaque de recouvrement (54) supérieure, s'appuyant sur la première surface de montage (5), ainsi que des recouvrements (39, 40) pour les orifices (12, 13, 14) pratiqués dans le carter (3) et non utilisés par l'appareil d'usinage respectif (50, 75, 99, 109, 115, 132, 154), et la cas échéant pour la broche (11) qui dépasse de cette ouverture.

3. Machine universelle selon l'une des revendications 1 ou 2, caractérisée en ce que chaque surface de montage (5, 8, 9) est équipée du côté frontal avec des fixations rapides (35) pour fixer le capot protecteur (53) ou les divers appareils d'usinage (50, 75, 99, 109, 115, 132, 154).

4. Machine universelle selon l'une des revendications 1, 2 ou 3, caractérisée en ce que les premières parois latérales (6, 7) forment un angle pratiquement droit avec la surface de montage (8, 9) qui leur est respectivement associée.

5. Machine universelle selon l'une quelconque des revendications précédentes, caractérisée en ce que la deuxième surface de montage (8) est placée plus haut que la troisième surface de montage (9).

6. Machine universelle selon l'une quelconque des revendications précédentes, caractérisée en ce que la deuxième surface de montage (8) présente deux surfaces partielles (15) entre lesquelles est prévu un évidement en forme de segment circulaire, qui sert également d'orifice (13) dans la paroi latérale (8) associée pour laisser passer une lame (16) de scie circulaire.

7. Machine universelle selon l'une quelconque des revendications précédentes, caractérisée en ce que la deuxième et la troisième surfaces de montage (8, 9) présentent des renfoncements verticaux (18) comportant des perçages (19) pratiqués au fond.

8. Machine universelle selon l'une quelconque des revendications précédentes, caractérisée en ce que dans la paroi latérale (7) associée à la troisième surface de montage (9) l'orifice (14) prévu pour la broche (11) a la forme d'un trou oblong vertical.

9. Machine universelle selon l'une quelconque des revendications précédentes, caractérisée en ce que le carter (3) présente un capot inférieur (20) ainsi qu'un raccord d'aspiration (21) disposé au-dessus pour l'aspiration des poussières et des copeaux.

10. Machine universelle selon l'une quelconque des revendications précédentes, caractérisée en ce que le dispositif de pivotement (2) pour le moteur (1) présente un axe de pivotement (22) horizontal, qui s'étend perpendiculairement à l'arbre du moteur, et autour duquel on peut faire pivoter le moteur de manière continue sur au moins 135° et le bloquer dans la position de pivotement souhaitée.

11. Machine universelle selon l'une quelconque des revendications précédentes, caractérisée en ce que le dispositif de réglage en hauteur (4) pour le moteur (1) présente deux tiges filetées (25) disposées à proximité des deuxièmes parois latérales (23, 24), pouvant être entraînées de manière synchrone, ainsi que deux colonnes de guidage (26) qui s'étendent parallèlement auxdites tiges (25), et le long desquelles est guidé de manière réglable en hauteur, un berceau (27) pour le moteur.

12. Machine universelle selon la revendication 11, caractérisée en ce que l'entraînement des deux tiges verticales (25) s'effectue par l'intermédiaire d'un volant (28) qui tourillonne dans une paroi latérale (23, 24) et par l'intermédiaire de deux paires de pignons coniques (29).

13. Machine universelle selon l'une quelconque des revendications précédentes, caractérisée par un dispositif de blocage qui présente un volant de blocage (30) et bloque le moteur (1) dans la position en hauteur à laquelle il a été réglé.

14. Machine universelle selon l'une quelconque des revendications précédentes, caractérisée en ce que le berceau (27) pour le moteur présente un tube de guidage (31) dans lequel une fixation par sabot est montée de manière amovible, et bloquée par une vis de serrage (32).

15. Machine universelle selon l'une quelconque des revendications précédentes, caractérisée en ce que la broche (11) qui, lorsque l'arbre du moteur est en position verticale, traverse la première surface de montage (5) est supportée dans un palier-flasque renforcé (33) dont le palier est renforcé.

16. Machine universelle selon l'une quelconque des revendications précédentes, caractérisée en ce que le carter (3) est constitué d'une double coque en matière plastique avec de la mousse de matière plastique placée en sandwich.

17. Machine universelle selon l'une des revendications 2 à 16, caractérisée par une table de toupillage et de sciage (34) qui est fixée de manière amovible sur la première surface de montage (5), et qui constitue en même temps la plaque de recouvrement (54) du capot protecteur (53) et présente un recouvrement (39) pour l'orifice (13) ou l'évidement en formé de segment circulaire, prévu pour la lame de scie circulaire ainsi qu'un recouvrement (40) pour la broche (11) dépassant de la paroi latérale (7) opposée (figures 3 à 6).

18. Machine universelle selon la revendication 17, caractérisée en ce que la table (34) de toupillage et de sciage présente des orifices modifiables (36, 37) pour la broche (11), la lame de scie circulaire (16) ou une toupie (38).

19. Machine universelle selon l'une des revendications 17 ou 18, caractérisée en ce que la table (34) de toupillage et de sciage porte pour la lame de scie circulaire (16) un recouvrement supérieur (49) qui peut être écarté par pivotement, et qui est orientable autour d'un axe longitudinal horizontal (22) pour adaptation à une éventuelle position oblique de la lame de scie circulaire.

20. Machine universelle selon l'une des revendications 17 à 19, caractérisée en ce que sur la table (34) de toupillage et de sciage est fixée de manière amovible un capot protecteur (41) de la toupie.

21. Machine universelle selon la revendication 20, caractérisée en ce que le capot protecteur (41) de la toupie présente un raccord d'aspiration (42) destiné à une installation d'aspiration des poussières et des copeaux.

22. Machine universelle selon la revendication 20 et 21, caractérisée en ce que le capot protecteur (41) de la toupie présente une partie inférieure (43) par laquelle il s'adapte dans l'orifice (36) de la table de sciage et de toupillage (34) et une partie supérieure (44) qui, pour son réglage par rapport à la toupie, est mobile relativement à la partie inférieure (43) du capot.

23. Machine universelle selon l'une des revendications 17 à 22, caractérisée en ce que la table de toupillage et de sciage (34) présente une monture (45) pour une butée parallèle (47) et un guidage (46) pour une règle à onglets (48).

24. Machine universelle selon l'une des revendications 2 à 16 caractérisée par une mortaiseuse (50) qui repose sur la troisième surface de montage (9) par une console (51), et qui chevauche par un capot (52) la plaque supérieure de recouvrement (54) du capot protecteur (53) et y est bloquée amoviblement (55) tandis qu'un mandrin porte-mèche (57) recevant une mèche (56) est monté sur la broche s'étendant horizontalement (11) de l'arbre moteur (1) et dépasse à travers un évidement correspondant prévu dans le capot (52) (figures 7 et 8).

25. Machine universelle selon la revendication 24, caractérisée en ce que sur la console (51) est disposé un chariot à mouvements croisés (59) qui est équipé d'un étau (58) pour la pièce à usiner, et qui présente un chariot longitudinal (62) pouvant être déplacé au moyen d'un levier (60) dans le sens axial de la broche (11) et un chariot transversal (64) pouvant être déplacé dans le sens transversal au moyen d'un deuxième levier (63).

26. Machine universelle selon l'une des revendications 2 à 16, caractérisée par une ponceuse à bande (75) qui repose sur la deuxième surface de montage (8), est reliée rigidement à la plaque supérieure de recouvrement (54) du capot protecteur (53), et dont un arbre intermédiaire (76) entraîné par la broche (10) du moteur (1) par l'intermédiaire d'une courroie (77) fait saillie par l'ouverture (13) du carter (3) (figures 12 à 14).

27. Machine universelle selon la revendication 26, caractérisée en ce que la bande de ponçage (78) passe autour d'un rouleau réglable (79) et de deux rouleaux fixes (80, 81) et forme une surface de ponçage horizontale (82) ainsi qu'une surface de ponçage verticale (83), à chacune desquelles est associé un raccord d'aspiration (84, 85).

28. Machine universelle selon la revendication 27, caractérisée en ce que le palier (86) du rouleau réglable (79) est chargé par un ressort (87) qui peut être détendu par un excentrique (89) actionné par un levier (88).

29. Machine universelle selon l'une des revendications 27 ou 28, caractérisée en ce qu'une butée transversale (90) peut être amenée par pivotement dans la zone de la surface de ponçage horizontale (82) et une butée longitudinale (91) peut être amenée par pivotement dans la zone de la surface de ponçage verticale (83).

30. Machine universelle selon l'une des revendications 2 à 16, caractérisée par une ponceuse à disque (99) s'appuyant sur la troisième surface de montage (9) par son carter (100) qui recouvre la moitié inférieure du disque de ponçage (101), présente en cet endroit un raccord d'aspiration (102), forme à mi-hauteur du disque de ponçage (101) une table (103), chevauche par une partie supérieure de carter (100a) la plaque supérieure de recouvrement (54) du capot protecteur (53) et y est bloqué amoviblement, tandis que le disque de ponçage (101) est monté sur la broche (11) s'étendant horizontalement, du moteur (1) (figures 18 et 19).

31. Machine universelle selon l'une des révendications 2 à 16, caractérisée par un dispositif de ponçage à vue (109) qui s'appuie par son carter (110) sur la plaque de recouvrement supérieure (54) du capot protecteur (53) et est bloqué amoviblement sur celle-ci (55), le carter (110) du dispositif de ponçage présentant une lampe (111) et recouvrant, à l'exception d'une découpe formant regard (112), un disque horizontal de ponçage à vue qui est fixé par un mandrin (114) sur la broche verticale (11) du moteur (1) (figures 22 et 23).

32. Machine universelle selon l'une des revendications 2 à 16, caractérisée par une dégauchisseuse (115) qui repose par son carter (118) sur la deuxième surface de montage (8) et comporte une table d'alimentation (117) et de sortie (118) et un arbre porte-lames horizontal (119) qui fait partiellement saillie par une fente (120) de la table d'alimentation (117), et est entraîné par la broche horizontal (10) du moteur (1) par l'intermédiaire d'une courroie (121), tandis que le capot protecteur (53) est articulée au carter (116) (figures 24 à 26).

33. Machine universelle selon l'une des revendications 2 à 16, caractérisée par une scie à ruban (132) qui repose par son carter (133) sur la deuxième surface de montage (8) et comporte une table de sciage (134), un raccord d'aspiration (135), une poulie supérieure réglable (136) pour la scie à ruban (137) et une poulie d'entraînement inférieure (138) qui est entraînée par la broche horizontale (10) du moteur (1) par une courroie (139) tandis que le capot protecteur (53) est fixé par sa plaque de recouvrement supérieure (54) sur le carter (133) (figures 30 et 31).

34. Machine universelle selon la revendication 33, caractérisée en ce que la poulie supérieure (136) est réglable verticalement et peut être écartée de son plan vertical par pivotement.

35. Machine universelle selon l'une des revendications 33 ou 34, caractérisée en ce que la table de sciage (134) peut être écartée de son plan horizontal par pivotement et bloquée dans la position souhaitée.

36. Machine universelle selon l'une des revendications 2 à 16, caractérisée par un tour à bois (154) qui s'appuie par un pied (155) sur la troisième surface de montage (9) et par un support réglable en hauteur (156) sur le sol, et qui comporte une poupée (157) qui s'appuie sur la plaque de recouvrement supérieure (54) du capot (53) et peut lui être fixée amoviblement, la poupée comportant une broche (158) qui est entraînée par la broche (11) du moteur (1) par l'intermédiaire d'une courroie (159) et qui est alignée avec la pointe rotative (160) d'une poupée mobile (161) qui coulisse avec possibilité de blocage sur un tube support horizontal (162) fixé sur la poupée (157) (figures 34 et 35).

37. Machine universelle selon la revendication 36, caractérisée en ce qu'un appui pour la main (163) réglable en hauteur coulisse sur le tube support (162) avec possibilité de blocage.

0 121 609

## Figur 1

## Figur 2

1

Figur 3

Figur 4

## Figur 5

## Figur 6

Fig. 7

Fig. 8

0 121 609

Fig. 9

Fig. 10

71

72

72

Fig. 11

79 87 78  82  90  80

83
84
91

75

93  95  81  94
35  85

Fig. 12

9
40

3

1

92 86 88

89  76: 90

87

Fig. 13

Fig. 14

Fig. 15

Fig. 16

Fig. 17

Fig.18

99

100a

101

103

3

102

9

X

---

Ansicht „X"

Fig.19

100a

55

101

54

1

108

103

39

100

8

102

11

9

21

Fig. 20

99

X

Ansicht „X"

Fig. 21

104

105

107  106

108

103

_Fig.22_

111  110  109

113  114  .55

8  54  3  9

1

_Fig.23_

15  54

15  9

112

Fig. 24

Fig. 25

Fig. 26

Fig.27

Fig.28

123

130

131

131

Fig.29

Fig.30

Fig. 31

Fig. 32

132

152

151

153

Fig. 33

143

136

146

137

134

135

153   139

0 121 609

Fig. 34

Fig. 35

43

Fig.36

Fig.37

157

155

168

Fig. 38